(19)

Europäisches
Patentamt

European
Patent Office

Office européen
des brevets

(11) **EP 4 746 277 A1**

(12) **EUROPEAN PATENT APPLICATION**

(43) Date of publication:
**20.05.2026 Bulletin 2026/21**

(21) Application number: **25215195.6**

(22) Date of filing: **12.11.2025**

(51) International Patent Classification (IPC):
**H02M 7/483** $^{(2007.01)}$      **H02M 1/00** $^{(2006.01)}$
**H02M 7/487** $^{(2007.01)}$      **H02M 1/42** $^{(2007.01)}$

(52) Cooperative Patent Classification (CPC):
**H02M 7/487; H02M 1/0058; H02M 1/4208;**
**H02M 1/4233; H02M 1/4241; H02M 7/4837;**
H02M 1/4216; H02M 1/4225; H02M 7/483

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **18.11.2024 US 202418950576**

(71) Applicant: **DELTA ELECTRONICS, INC.**
**11491 Taipei (TW)**

(72) Inventors:
• **HARYANI, Nidhi**
**Morrisville, NC 27560 (US)**
• **ANURAG, Anup**
**Morrisville, NC 27560 (US)**
• **ZHANG, Chi**
**Morrisville, NC 27560 (US)**
• **Barbosa, Peter Mantovanelli**
**Taoyuan City 320023 (TW)**

(74) Representative: **Uexküll & Stolberg**
**Partnerschaft von**
**Patent- und Rechtsanwälten mbB**
**Beselerstraße 4**
**22607 Hamburg (DE)**

(54) **MULTI-LEVEL BIDIRECTIONAL AC-DC CONVERTERS AND MODULATION METHODS THEREOF**

(57)    The present disclosure provides a multi-level, bi-directional AC-DC converter (42, 82, 84), including a first inductor (41), a resonant branch (43) having a second inductor ($L_b$) and a first capacitor ($C_b$), and at least two pairs of switches ($S_1$ and $\overline{S}_1$ and $S_2$ and $\overline{S}_2$ or $S_1$, $S_2$, $S_3$, and $S_4$) arranged in a branch and coupled to the first inductor (41) and the resonant branch (43), wherein the at least two pairs of switches ($S_1$ and $\overline{S}_1$ and $S_2$ and $\overline{S}_2$ or $S_1$, $S_2$, $S_3$, and $S_4$) are coupled to at least one circuit component (45, 45a, 45b). In one aspect, the multi-level converter (42, 82, 84) is configured as an N-level, flying capacitor, multi-level converter (42), wherein N is greater than or equal to 3. A modulation method (106) for the multi-level, bi-directional AC-DC converter (42, 82, 84) includes modulating the inductor current using integrated triangular plus trapezoidal conduction modulation (108).

FIG. 7A

EP 4 746 277 A1

**Description**

FIELD OF THE INVENTION

This invention relates to multi-level bridgeless AC-DC converters and associated modulation methods.

BACKGROUND OF THE INVENTION

With recent trends of increasing switching frequency of AC-DC power converters to reduce the size of the passive components, such as the boost inductor and the electromagnetic interference (EMI) filter, the need for soft-switching becomes more and more pertinent in present-day high-performance power supplies (see, e.g. the article: "Z. Liu, F. C. Lee, Q. Li and Y. Yang, "Design of GaN-Based MHz Totem-Pole PFC Rectifier," in IEEE Journal of Emerging and Selected Topics in Power Electronics").

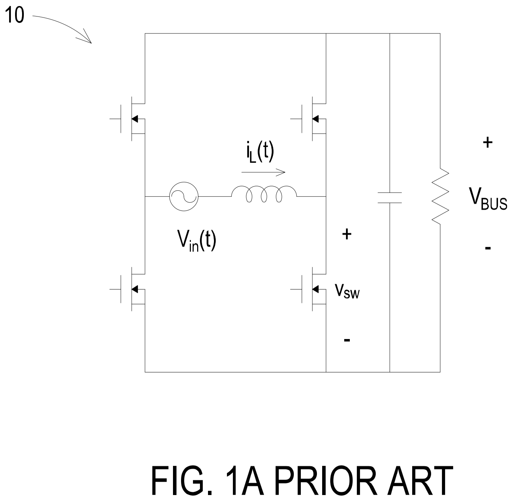

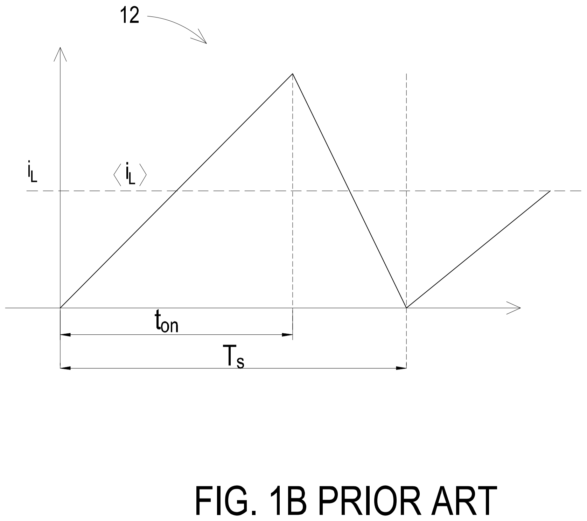

FIG. 1A shows a conventional (bridgeless), boost power factor correction (PFC) rectifier or converter circuit 10 (rectifier used interchangeably herein with converter). In particular, FIG. 1A shows a conventional, boost PFC converter circuit 10 that operates in a triangular/boundary or critical conduction mode. The boost PFC converter circuit 10 is configured as a two-level boost converter (i.e., an N-level boost converter, where N is an integer number equal to 2 as is understood by one having ordinary skill in the art). The boost PFC converter circuit 10 is operated with semiconductor devices (e.g., operating as switches) rated for blocking an entire bus voltage, $V_{Bus}$, and the devices are gated with variable switching frequency, allowing for the inductor current to decrease all the way down to zero, as shown in FIG. 1B.

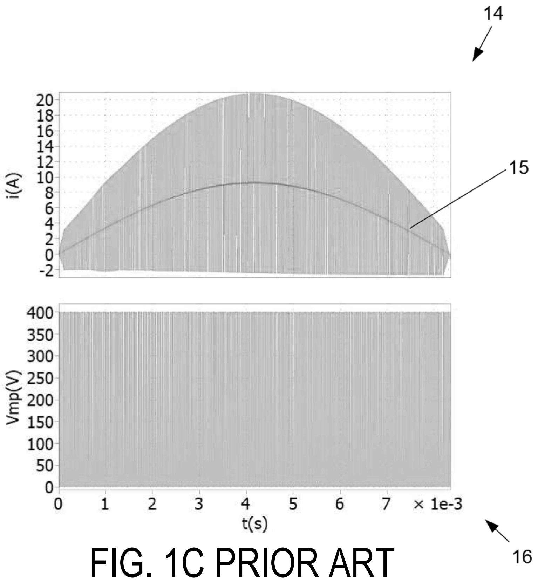

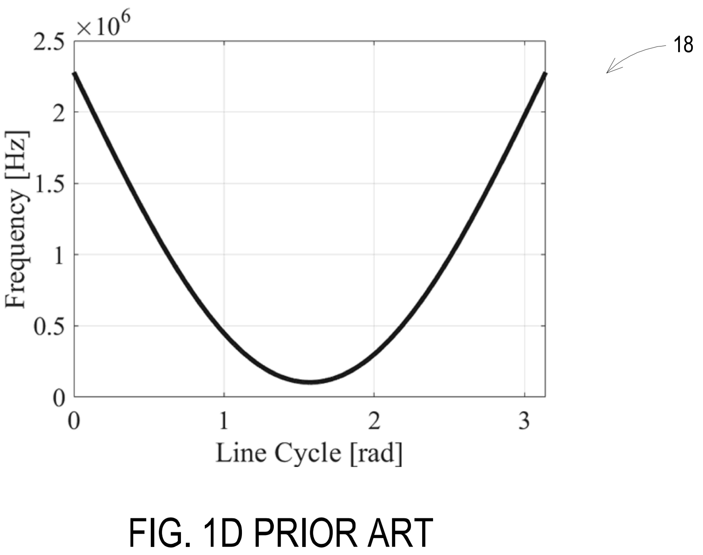

FIG. 1B shows an inductor current waveform 12 in a switching period for the boost PFC converter circuit 10 (FIG. 1) operated under what may be referred to in the industry as constant-on time control, critical conduction mode (CRM). Constant-on time control allows automatic power factor correction capability.

FIG. 1C shows example waveform diagrams 14, 16 corresponding to inductor current (amperes) and switch node voltage, respectively, over half of the line cycle (in radians) for an example boost PFC converter stage (e.g., of boost PFC converter 10, FIG. 1) operated at boundary conduction (constant on-time controlled) mode or CRM. The operating waveforms of the switching node voltage and current inductor may be for a 50 or 60 Hz line frequency operation.

FIG. 1D also shows a diagram 18 (frequency (Hz) versus line cycle (radians)) of the associated switching frequency variation for a two-level converter (e.g., boost PFC converter 10, FIG. 1) operating according to CRM over the line cycle. In addition to the modulation enabling variable switching frequency operation over the line cycle (as shown in FIG. 1D), this mode of modulation also results in automatic input current-shaping without any active control, while at the same time, by the use of valley current switching, enabling zero voltage turn-on of all the semiconductor devices. However, this method may also result in high ripple on the main boost inductor, leading to high losses in the inductor and requiring the interleaving of multiple phases, which may lead to complex variable frequency interleaving control.

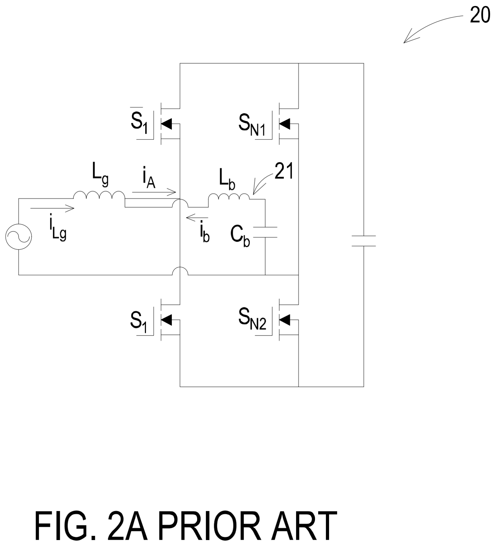

For instance, and referring again to FIG. 1C, the high frequency ripple 15 through L is twice the fundamental current, resulting in high losses in the inductor, and also requiring the interleaving of multiple phase legs. One mechanism for resolving the high ripple on the main boost inductor involves separating the boost inductor into two inductors in parallel: one large boost inductor that carries the grid current and one small resonant inductor for the high switching frequency current used for achieving zero-voltage switching (ZVS) as shown in the article D. Rothmund, T. Guillod, D. Bortis, J.W. Kolar, "99.1% Efficient 10 kV SiC-Based Medium-Voltage ZVS Bidirectional Single-Phase PFC AC/DC Stage", IEEE Journal of Emerging and Selected Topics in Power Electronics, VOL. 7, NO. 2, June 2019. FIG. 2A shows a two-level boost PFC 20 with an integrated LC branch 21 to filter the high frequency ripple passing through the semiconductor or switching devices, thus leading to (e.g., only) the fundamental current plus a small, high frequency ripple passing through the main boost inductor, Lg. The capacitor, Cb blocks DC current passing through the LC branch. As shown in FIG. 2A, the integrated LC branch 21 includes the small capacitor, Cb added in series with the resonant inductor, Lb, to block the low frequency current from flowing into the resonant branch (or stated otherwise, to filter the high frequency current in the device).

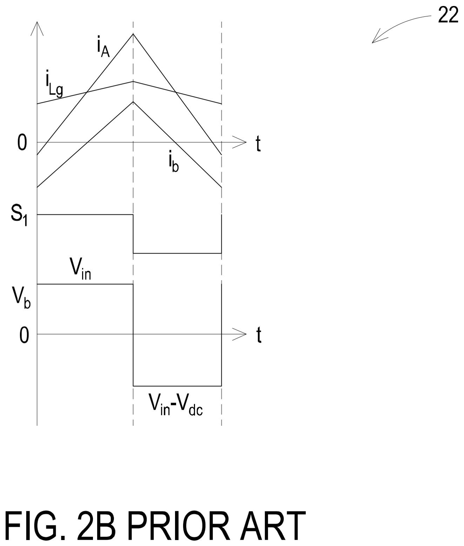

Example switching waveforms 22 are shown in FIG. 2B. As shown in FIG. 2B, the LC branch (e.g., LC branch 21 of FIG. 2A) filters the high frequency component of the device current and only, or substantially only, the fundamental current with a small, high frequency ripple flowing through $L_g$ as shown in FIG. 2B. FIG. 2B also shows that $i_A$ reaches zero before $S_1$ is turned on again, thus achieving ZVS turn-on. For instance, as $S_1$ is turned on, $i_b$ and $i_{Lg}$ increase as the voltage across $L_g$ and $L_b$ is $V_{in}$. Since $i_A > 0$, $\overline{S}_1$ ($\overline{S}_1$ being the complement of $S_1$) is turned on at 0 V. As $\overline{S}_1$ conducts, voltage across $L_g$ and $L_b$ is $V_{in} - V_{dc}$, $i_b$ and $i_{Lg}$ reduce and as $i_b + i_{Lg}$ $i_A$ reaches $I_{ZVS}$, $S_1$ is turned on again at 0 V.

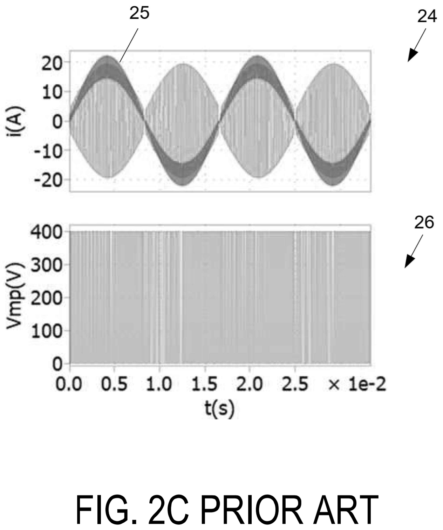

Example simulated currents 24 for this modulation scheme for the boost PFC 20 with an integrated LC branch 21 (referred to herein as integrated triangular conduction mode, or iTCM) over two line cycles are shown in FIG. 2C. The corresponding simulated midpoint voltages 26 are also shown. That is, FIG. 2C shows iTCM currents through the LC branch and the main inductor over two line cycles. Most of the high frequency current flows through $L_b$ with an average value 0, and $i_{Lg}$ 25 has a very small percentage of the ripple.

Another useful way of reducing device voltage stress and increasing effective frequency of the boost inductor is through the use of multi-level power conversion circuits (see e.g., the articles: (i) "T. A. Meynard and H. Foch, "Multi-level conversion: high voltage choppers and voltage-source inverters," PESC '92 Record. 23rd Annual IEEE Power Electronics Specialists Conference"; (ii) "Q. Huang, Q. Ma, P. Liu, A. Q. Huang and M. A. de Rooij, "99% Efficient 2.5-kW Four-Level Flying Capacitor Multilevel GaN Totem-Pole PFC," in IEEE Journal of Emerging and Selected Topics in Power Electronics"; and (iii) N. Haryani, S. J. Ohn, J. Hu, P. Rankin, R. Burgos and D. Boroyevich, "A Novel ZVS Turn-on Triangular Current Mode Control with Phase Synchronization for Three Level Inverters," 2018 IEEE Energy Conversion Congress and Exposition (ECCE), Portland, OR, USA, 2018, pp. 2207-2214). Multi-level circuits (e.g., or N-level circuits, where N is an integer number greater than or equal to 3) allow the use of lower voltage rated semiconductor devices, which often have better performance metrics and cost compared to their higher voltage rated counterparts. The use of multi-level circuits may also result in higher effective frequency in the passive components, compared to standard two-level circuits, which helps in size reduction of the passive components. However, achieving zero voltage switching (ZVS) in multi-level circuits is not well explored. Of particular interest are the Flying Capacitor Multi-Level (FCML) converters, which utilize small sized ceramic capacitors to clamp voltages across the semiconductor devices (see, e.g., commonly assigned U.S. Patent Publication No. 2024/0162831).

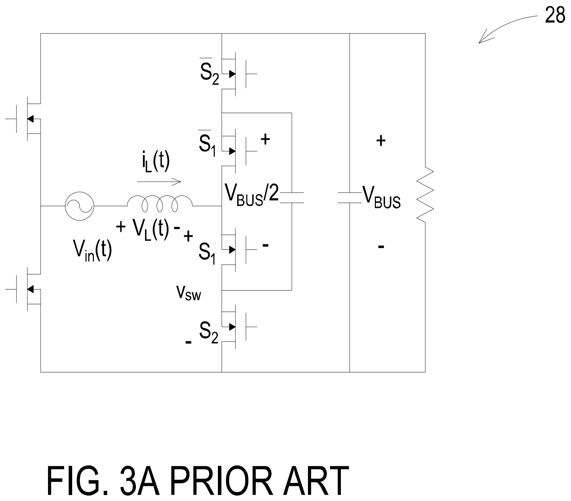

FIG. 3A shows an example three-level (e.g., N = 3) FCML boost converter 28 operating as a power factor correction (PFC) circuit. In this FCML boost converter 28, the inner two switches $S_1$ and $\overline{S}_1$ are gated in a complimentary fashion, and similarly, the outer two switches $S_2$ and $\overline{S}_2$ are gated in a complimentary fashion using time multiplexed gate signals.

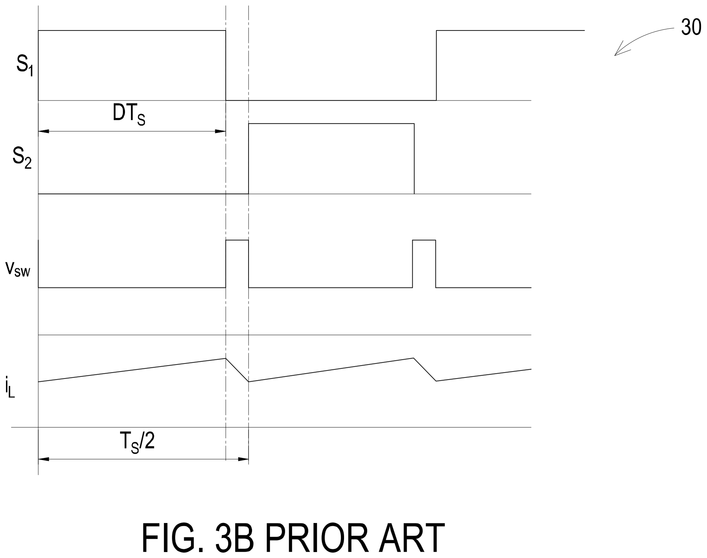

FIG. 3B shows example switching waveforms 30 corresponding to operation of the FCML boost converter 28, and in particular, the 180° phase-shifted gating signals for the switches. As shown in FIG. 3B, the rising edge of $S_1$ is phase-shifted by 180° from the gate-signal of switch $S_2$. Using this existing modulation scheme, the flying capacitor voltage has a steady-state value of $V_{Bus}/2$ and each device blocking voltage is also $V_{Bus}/2$. This modulation scheme also results in an effective switching frequency of the inductor, which is twice the device switching frequencies, as indicated in FIG. 3B. In this case, the duty cycle of switches $S_1$ and $S_2$ are the same, and is dictated by the input voltage to output voltage relationship given by:

$$V_{Bus} = \frac{v_{in}}{1-D} \ \ldots\ldots(1)$$

For a PFC converter where the duty cycle of the switches varies in the range of $0 \leq D \leq 1$ for half of the line cycle operation, the inductor current ripple is given as:

$$\Delta i_{pp,norm} = \frac{V_{Bus}D_{eff}(1-D_{eff})}{Lf_s(N-1)^2}; \ D_{eff} = (1-D)(N-1) - \lfloor(1-D)(N-1)\rfloor \ .. (2)$$

The inductor ripple varies over a wide range. Here "N" indicates the number of levels in the FCML circuit.

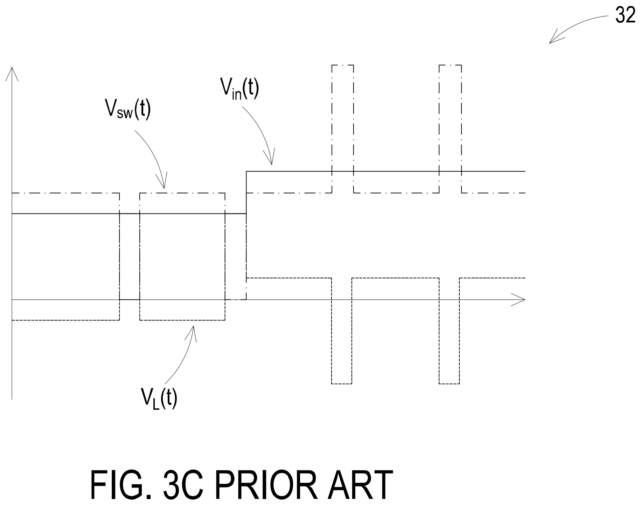

An example switching waveform 32 with $D \approx 0.5$ and $v_{in}(t) = V_{Bus}/2$ is shown in FIG. 3C. With continued reference to the example gate pulses shown in FIG. 3B, the rising edge of switch $S_1$ is phase shifted by 180° compared to switch $S_2$ and they have the same duty cycle governed by the input-to-output voltage relationship of the FCML boost converter 28. This phase-shifted modulation strategy results in balanced flying capacitor voltages and a reduced dv/dt on the switching nodes, as shown in FIG. 3C, and is widely adopted for FCML converters.

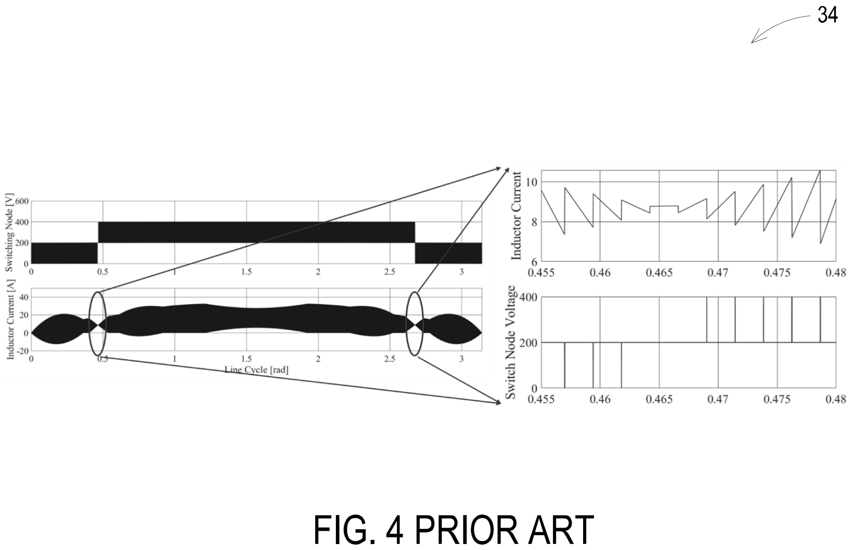

FIG. 4 shows a composite diagram 34 corresponding to operations of a three level FCML boost PFC converter (e.g., FCML boost converter 28), revealing the switching node voltage and inductor current over a complete half line cycle. As shown in FIG. 4, the line cycle waveforms are zoomed in (e.g., highlighted by encircling) around $V_{in} \sim V_{dc}/2$. It can be observed how the current ripple decreases to zero for a couple of operating points (e.g., as zoomed in) in the line cycle. It should be noted that the inductor current ripple becomes zero during the operating points where $v_{in}(t) = V_{Bus}/2$.

A root cause of the inductor current ripple collapsing is evident from the zoomed in switching node voltage waveform shown to the right in FIG. 4. During the line cycle when $v_{in}(t) \cong V_{Bus}/2$ and either increasing or decreasing, the switching node voltage goes from switching between 0, $V_{Bus}/2$ to switching between $V_{Bus}/2$, $V_{Bus}$ or vice versa. As the input voltage is also very close or equal to $V_{Bus}/2$, the inductor current essentially "sees" very little volt-seconds applied across it (the inductor). This phenomenon makes achieving ZVS or boundary conduction mode operation for FCML PFCs difficult using existing phase-shifted modulation schemes.

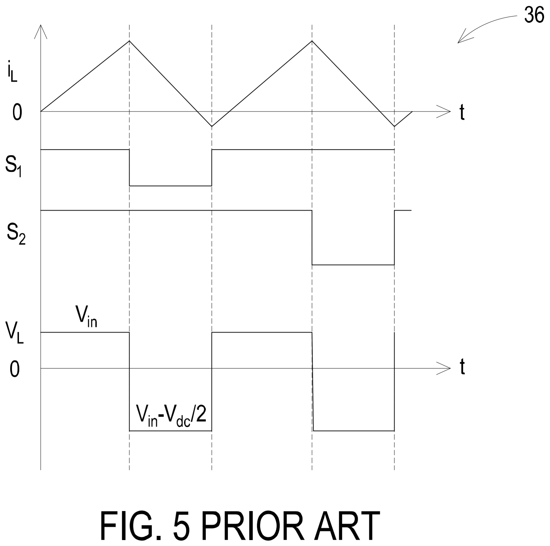

FIG. 5 shows an example switching cycle waveform 36 of inductor current for a flying capacitor three-level converter (e.g., FCML boost converter 28) in TCM operation. ZVS turn-on for all the devices is achieved by bringing the current negative before the device (e.g., $S_1$) is turned on, as shown in FIG. 5. However, when the flying capacitor voltage is approximately equal to the AC voltage, the inductor current ripple is not enough (to achieve ZVS turn-on, as exhibited in FIG. 4) with only 180° phase-shifted three-level states.

SUMMARY OF THE INVENTION

In accordance with an aspect of the present disclosure, there is provided a multi-level, bi-directional AC-DC converter, including: a first inductor; a resonant branch having a second inductor and a first capacitor; and at least two pairs of switches arranged in a branch and coupled to the first inductor and the resonant branch, the at least two pairs of switches coupled to at least one circuit component.

These and other aspects of the invention will be apparent from and explained with reference to the embodiment(s) described hereinafter.

BRIEF DESCRIPTION OF THE DRAWINGS

Many aspects of the embodiments of the present invention can be better understood with reference to the following drawings, which are diagrammatic. The components in the drawings are not necessarily to scale, emphasis instead being placed upon clearly illustrating the principles of the embodiments of the present invention. Moreover, in the drawings, like reference numerals designate corresponding parts throughout the several views.

FIG. 1A is a schematic diagram that shows an example bridgeless boost power factor correction (PFC) converter circuit.

FIG. 1B is a schematic diagram that shows an example inductor current waveform in a switching period for a boost PFC converter circuit operated under constant on-time control, critical conduction mode (CRM).

FIG. 1C illustrates waveform diagrams that show example inductor current and switch node voltage of a constant on-time controlled boost PFC converter circuit operating in CRM.

FIG. 1D is a diagram that shows variation in switching frequency over a line cycle for a constant on-time controlled boost PFC converter circuit operating in CRM.

FIG. 2A is a schematic diagram that shows an example two-level boost PFC with an integrated LC branch to filter the high frequency current in the devices.

FIG. 2B is a diagram that illustrates example switching waveforms for a two-level boost PFC with integrated LC branch.

FIG. 2C includes diagrams that show example integrated triangle conduction mode (iTCM) currents through an LC branch and main inductor over two line cycles for a two-level boost PFC with integrated LC branch.

FIG. 3A is a schematic diagram that shows an example three-level FCML boost converter operating as a power factor correction circuit.

FIGS. 3B-3C are diagrams illustrating example switching waveforms for a three-level FCML boost converter when $V_{ac} \sim V_{cfl}$.

FIG. 4 is a composite diagram that shows example switching node voltage and inductor current over a complete half line cycle for a three level FCML boost PFC converter with zoomed-in waveforms showing very low ripple when $V_{ac} \sim V_{cfl}$.

FIG. 5 is a diagram that shows example switching cycle waveforms of inductor current for a flying capacitor three-level converter in TCM operation.

FIG. 6A is a diagram that shows an addition of redundant states to generate the current required around $V_{in} \sim V_{dc}/2$.

FIG. 6B is a diagram that shows the half line cycle waveform on inductor current with the addition of redundant states, with a phase-shift applied such that the minimum current for zero voltage switching (ZVS) is achieved.

FIG. 7A is a schematic diagram that shows an embodiment of an example FCML converter with the addition of an LC resonant branch.

FIG. 7B is a schematic diagram that shows an equivalent circuit to that shown in FIG. 7A when $v_{ac}>0$.

FIGS. 7C and 7D are diagrams that show example switching cycle operations with gating signals and $L_b$ and $L_g$ current for the FCML converter of FIG. 7A for $V_{in}<V_{dc}/2$ and $V_{in}>V_{dc}/2$ respectively.

FIG. 8A is a diagram that shows example inductor current frequency over a half line cycle for the FCML converter of FIG. 7A.

FIG. 8B is a composite diagram that shows $i_{Lb}$ and $i_{Lg}$ for the FCML converter of FIG. 7A over two line cycles, indicating that around $V_{in} \sim V_{dc}/2$, the inductor current ripple is not enough to achieve ZVS turn-on.

FIG. 9 is a diagram that shows example gating signals and current waveforms for the FCML converter of FIG. 7A with the addition of redundant switching states to create the ripple needed for ZVS turn-on, in accordance with an embodiment of the invention.

FIG. 10A is a diagram that shows an example flying capacitor charge imbalance introduced by the addition of redundant states in three-level modulation.

FIG. 10B is a diagram that shows charge can be balanced by swapping the gating signals for inner leg and outer leg every consecutive cycle, in accordance with an embodiment of the invention.

FIG. 11A is a schematic diagram that shows an example three-level FC converter indicating $i_{Cfl}$.

FIG. 11B is a diagram that shows $i_{Cfl}$ for one switching cycle in a three-level FC converter for TCM with redundant states.

FIG. 11C is a diagram that shows that flying capacitor charge can be balanced by swapping the gating signals between inner leg and outer leg, in accordance with an embodiment of the invention.

FIG. 12A is a composite diagram that shows the currents and mid-point voltage over one line cycle with ripple in $i_{Lb}$ added to achieve ZVS, and also shows spikes occurring in the current during a mode change.

FIG. 12B is a composite diagram that shows example inductor current frequency and switching frequency over a half line cycle.

FIG. 13A is a diagram that shows example trajectories of normalized $i_{Lb}$ and $v_{Cb}$ for 180° phase-shifted modulation and <180° phase-shifted modulation with redundant states.

FIG. 13B is a diagram that illustrates an embodiment of modulation transition based on trajectory control, where part of two trajectories are aligned for smooth transition between the modes, in accordance with an embodiment of the invention.

FIGS. 14A-14C are diagrams that show current waveforms in $L_b$ and $L_g$ with no spikes during mode change achieved by modulation transition based on trajectory control with zoom in of the currents and mid-point voltage.

FIG. 15A is a schematic diagram that shows an example single-phase three-level FC converter with a filter capacitor operating in TCM mode.

FIG. 15B is a diagram that shows example currents and mid-point voltages over one line cycle with redundant states added to achieve ZVS, and also shows spikes occurring in the current during a mode change.

FIG. 16 is a diagram that shows example normalized trajectories of $i_{Lb}$ and $v_{Cb}$ with modulation transition based on trajectory control for TCM, in accordance with an embodiment of the invention.

FIGS. 17A-17C are diagrams that show example inductor current and mid-point voltage over a half line cycle in TCM with an embodiment of modulation transition based on trajectory control applied, resulting in no spike during mode change.

FIG. 18A is a schematic diagram that shows an embodiment of an example single-phase three-level ANPC converter operated in integrated triangular plus trapezoidal current or conduction mode (iTrCM).

FIG. 18B is a schematic diagram that shows an embodiment of an example DNPC converter operated in iTrCM.

FIGS. 19A-19B are diagrams that show example iTrCM current waveforms and gating signals for ANPC for $V_{in}<V_{dc}/2$ and $V_{in}>V_{dc}/2$, respectively, in accordance with an embodiment of the invention.

FIG. 20 is a diagram that shows example phase-shifted three-level current and gating waveforms for ANPC for $V_{in} \sim V_{dc}/2$, in accordance with an embodiment of the invention.

FIGS. 21A-21B are diagrams that show gating signals for ANPC in iTrCM for $V_{in}<V_{dc}/2$ and $V_{in}>V_{dc}/2$, respectively, in accordance with an embodiment of the invention.

FIGS. 22A-22B are diagrams that show gating signals for DNPC in iTrCM for $V_{in}<V_{dc}/2$ and $V_{in}>V_{dc}/2$, respectively, in accordance with an embodiment of the invention.

FIG. 23 is a schematic diagram that shows an embodiment of an example control loop for a multi-level, bi-directional AC-DC converter.

FIG. 24 is a flow diagram that shows an embodiment of an example modulation method for multi-level, bi-directional AC-DC converters.

FIG. 25 is a flow diagram that shows an embodiment of an example modulation method for multi-level, bi-directional AC-DC converters.

DETAILED DESCRIPTION OF THE PREFERRED EMBODIMENT

Certain embodiments of single and three-phase, multi-level, bi-directional converters with a resonant branch and modulation schemes/strategies for multi-level, bi-directional converters are disclosed. According to one embodiment, a modulation strategy for a multi-level, bi-directional AC-DC converter operating with integrated triangular plus trapezoidal current or conduction mode (iTrCM) is disclosed, which enables the multi-level, bi-directional AC-DC converter to achieve zero-voltage switching (ZVS) over an entire line cycle operation. In one embodiment, the multi-level, bi-directional AC-DC converter operates as a 3-level converter and includes four semiconductor devices (switches) along with a resonant branch including a resonant inductor (L) and capacitor (C) branch. In one embodiment, a modulation strategy uses variable frequency operation in conjunction with a phase-shift between carriers to not only enable ZVS, but to do so with minimum required root mean square (RMS) current stress. The additional small LC branch acts as a filter for high ripple produced by the modulation. Accordingly, a boost inductor in a multi-level, bi-directional AC-DC converter embodied as, say, a flying capacitor, multi-level (FCML) boost, power factor correction (PFC) converter, does not have to carry the high ripple current and may be designed (and optimized) for the low ripple equivalent to an FCML operating in continuous conduction mode (CCM), which may result in lower overall losses and/or size of the converter.

Digressing briefly, critical conduction mode (CRM)/ triangular conduction mode (TCM) uses interleaving (e.g., to reduce the input current ripple) at variable frequency, thus increasing the complexity of the system, whereas iTrCM may lead to much lower ripple with one phase leg. In existing modulation strategies for FCML boost PFC converters, for instance, when the carrier waveforms are phase shifted by 180°, the flying capacitor voltage is naturally balanced after every switching cycle or every two inductor current cycles. In one embodiment, a similar flying capacitor voltage balance may be achieved using less than (<)180° phase-shifted modulation by introducing alternating lead-lag switching between the inner leg and outer leg. Through this alternating lead-lag method, the flying capacitor voltage is balanced over two switching cycles. A similar method may be employed in FCML using TCM (see, e.g., "S. Mukherjee, C. Zhang, P. Barbosa, "Soft-Switched Multi-Level AC-DC Power Factor Correcting Rectifiers", U.S. Patent Publication No. 2024/0162831, assigned to Delta Electronics) to balance flying capacitor voltage over two switching cycles. Further, the methods described herein do not result in increased stress on the semiconductor devices and/or capacitors.

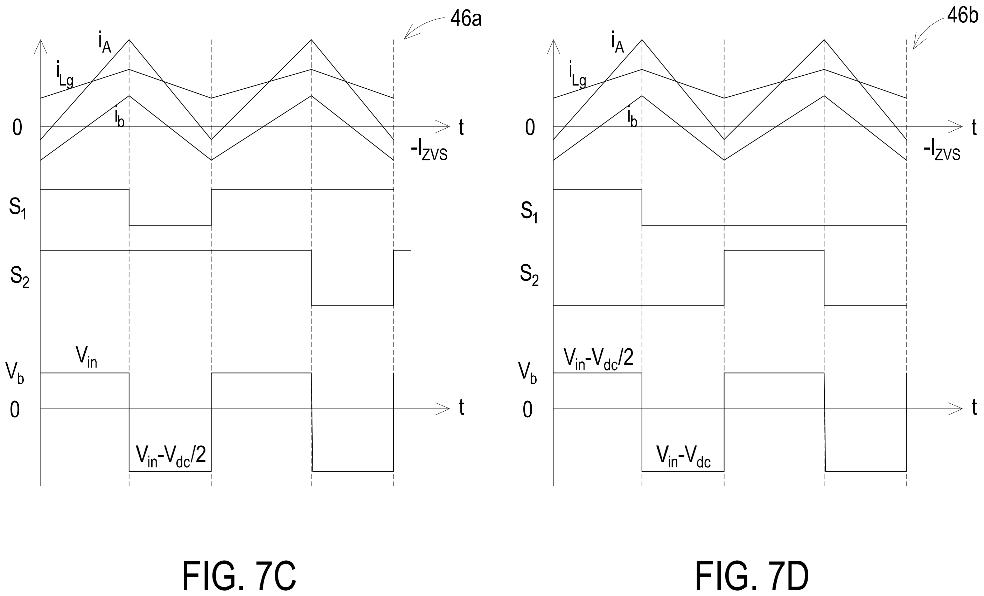

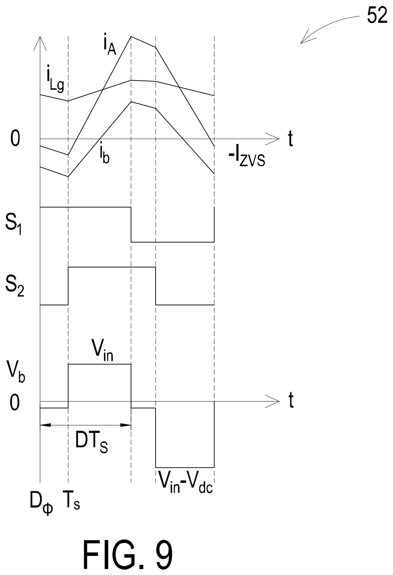

When the modulation changes from one hundred-eighty degree (180°) phase-shifted modulation (see, e.g., FIGS. 7C-7D) to variable, phase-shifted modulation (see, e.g., FIG. 9A, less than 180 degrees), the capacitor voltage and inductor current change from one mode to another (e.g., between 180° phase shifted modulation and variable, phase shifted modulation) at specific points in the switching cycle to avoid transient spikes and oscillations in current and voltage. In one embodiment, modulation transition based on trajectory control is used, and in some embodiments, may be further extended for FCML TCM (e.g., applicable to the circuit topology described in U.S. Patent Publication No. 2024/0162831).

Having summarized certain features of multi-level, bi-directional AC-DC converters with a resonant branch and modulation schemes/strategies of the present disclosure, reference will now be made in detail to the description of multi-level, bi-directional AC-DC converters with a resonant branch and modulation schemes/strategies as illustrated in the drawings. While a FCML bridgeless totem-pole boost PFC converter device with a resonant branch will be described in connection with some of these drawings, with emphasis on a three-level configuration, there is no intent to limit it to the embodiment or embodiments disclosed herein. That is, the embodiments of other bi-directional AC-DC converters may be used and hence are contemplated to be within the scope of the invention. Further, the embodiments described herein may likewise be applied to multi-level, or N-level, configurations where N is an integer number greater than three. Also, though single phase examples are described, the modulation schemes disclosed herein may be used for three-phase applications as three independent single-phase circuits, which enables three-phase ZVS FCML PFC Boost rectifiers to achieve ZVS over a complete line cycle with near minimum RMS currents. Further, as indicated above, other types of multi-level, bi-directional converters may be used, including Active Neutral Point Clamped (ANPC), Diode Neutral Point Clamped (DNPC), and T-type converters, and the modulation strategies described herein may be extended to these other types of multi-level converters. It should be appreciated by one having ordinary skill in the art, in the context of the present disclosure, that the disclosed FCML PFC boost converters described herein may be suitable for high efficiency on-board chargers or server power supplies with, for instance, a 800 V/ 400 V DC bus, where low voltage semiconductors can be leveraged with high efficiency operation. However, the multi-level converters are not limited to these voltages. Also, though iTCM is focused on for the various examples, it should be appreciated by one having ordinary skill in the art in the context of the present disclosure that the current or conduction modulation may be in the form of triangular or trapezoidal waveforms (or, more generally referred to herein as TrCM, or for integrated, iTrCM, to encompass triangular and trapezoidal waveforms). Further, although the description identifies or describes specifics of one or more embodiments, such specifics are not necessarily part of every embodiment, nor are all of any various stated advantages necessarily associated with a single embodiment. On the contrary, the intent is to cover alternatives, modifications and equivalents included within the principles and scope of the disclosure as defined by the appended claims. For instance, two or more embodiments may be interchanged or combined in any combination. Further, it should be appreciated in the context of the present disclosure that the claims are not necessarily limited to the particular embodiments set out in the description.

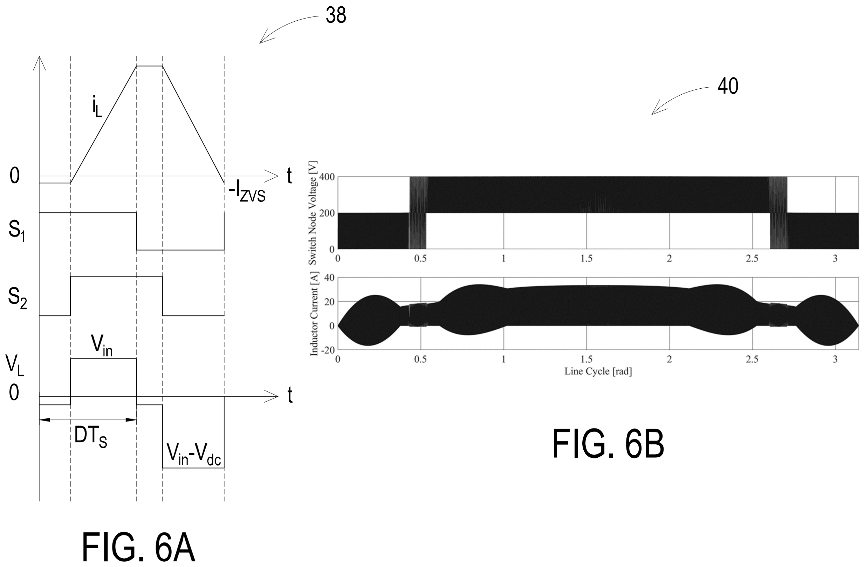

Soft switching for three-level FCML converters, such as shown in FIG. 3A, with TCM, is described in the above-referenced "Soft-Switched Multi-Level AC-DC Power Factor Correcting Rectifiers", which proposes a variable phase shift between $S_1$ and $S_2$. The technique described therein is performed in a manner such that there's common conduction time between $S_1$ and $S_2$, with one turning-on after a delay as shown in the diagram 38 of FIG. 6A. Redundant states refer to switches $S_1$ and $S_2$, for instance, sharing a common conduction time, and also sharing a common off-time, in one switching cycle (e.g., note the difference between FIG. 5 and FIG. 6A). The redundant states are used to generate the current required around $V_{in} \sim V_{dc}/2$. That is, with these redundant states, current ripple is increased such that soft switching is achieved for the entire main cycle, as shown illustratively by the half line cycle waveform with this modulation as illustrated in the diagram 40 of FIG. 6B. However, like the two-level converter, TCM may lead to high ripple in the boost inductor, which engenders the need for variable frequency interleaving control, increases the number of components, and also results in a challenging design for the boost inductor (e.g., especially since the inductor should be designed to carry double the fundamental current at high frequency as well as the low frequency fundamental current).

To circumvent one or more of the problems associated with loss of ZVS during the important transition points in an FCML PFC converter, the disclosure, "Soft-Switched Multi-Level AC-DC Power Factor Correcting Rectifiers", proposes a scheme that reduces the phase shift between $S_1$ and $S_2$. In this scheme, the phase-shift between the rising edges of switches $S_1$ and $S_2$ is reduced to a small phase shift from 180°, which makes the switching node voltage transition between 0, $V_{Bus}$. It should be noted that the duty cycle of the switches is still determined by the boost relationship between input and output voltages, but the inductor sees a much larger volt-seconds applied across it as a consequence of using the redundant switching states. It should also be noted that the frequency multiplication effect on the inductor is not sustained anymore. When the redundant states are used, the ripple frequency of the inductor becomes the same as the switching frequency of the devices. However, since this modulation strategy is only envisioned for a narrow range in the line cycle, this modulation scheme helps make the inductor current negative and achieve ZVS over the important operating points in an FCML converter. The main difference between the standard modulation scheme and the proposed modulation scheme can be seen from inspection of FIG. 5 and FIG. 6A.

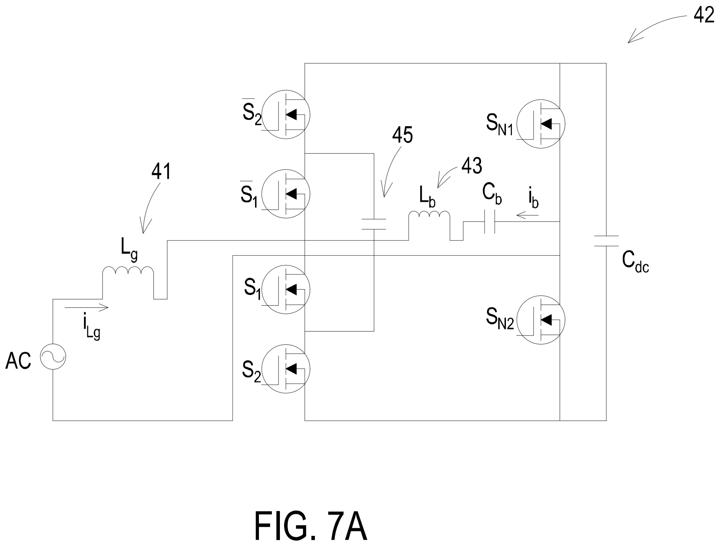

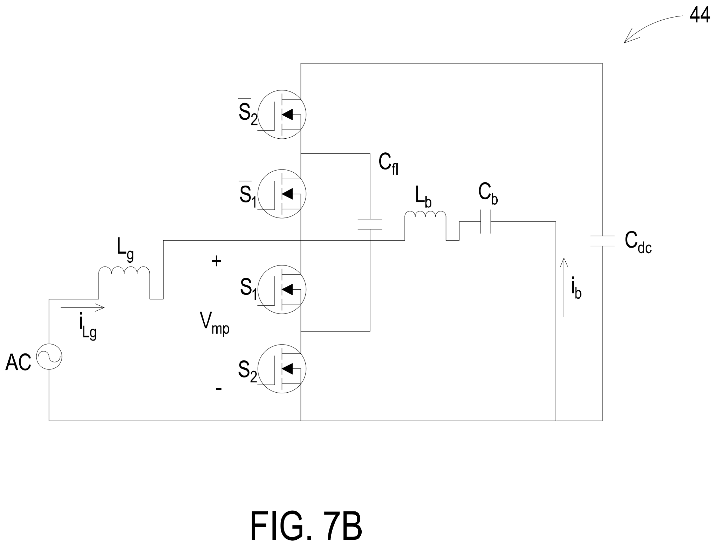

Having described some issues involved with modulation strategies associated with FCML and TCM, attention is now directed to FIG. 7A, shows an embodiment of an example multi-level, bi-directional AC-DC converter, and more particularly for illustrative purposes, an example FCML (e.g., 3-level) PFC converter 42 with the addition of an LC resonant branch 43 (e.g., $L_b$ and $C_b$). As shown in FIG. 7A, the inductor $L_g$ 41 is coupled to a branch of two pairs of switches (inner two switches $S_1$ and $\overline{S}_1$ are gated in a complimentary fashion, and similarly, the outer two switches $S_2$ and $\overline{S}_2$), with the two pairs of switches coupled to a circuit component 45 embodied in this example topology as a flying capacitor (note that the reference number to circuit component also refers herein to the corresponding, specific device, such as flying capacitor, switched diode, or diode). The high frequency ripple required for ZVS turn-on flows through $L_b$ and $C_b$ and $L_g$ carries the low frequency 50/60 Hz current plus a small percentage of ripple, somewhat like in a continuous conduction mode (CCM) power factor correction (PFC) or inverter. For $v_{ac} > 0$, $S_2$ conducts, and the equivalent circuit 44 is shown in FIG. 7B. The current $i_A$ is negative enough for ZVS turn-on of $S_1$ and $S_2$ as shown by the diagram 46a in FIG. 7C (for $V_{in} < V_{dc}/2$). The magnitude of negative current $i_b$ is such that $i_b + i_{Lg} = i_A$ is negative enough to achieve ZVS turn-on of devices. A similar result is observed in the diagram 46b in FIG. 7D (for $V_{in} > V_{dc}/2$). As shown in FIGS. 7C and 7D, the symmetry of FCML is still maintained in iTCM, and the inductor current frequency is double the switching frequency. The duty ratio for both the cases is calculated such that sinusoidal current is achieved in $L_g$. This results in variable switching frequency which is given by:

For $V_{in} < V_{dc}/2$

$$DV_{in} + (V_{in} - V_{dc}/2)(1-D) = 0$$

$$\Rightarrow D = 1 - \frac{V_{in}}{V_{dc}/2}$$

$$\left| i_{b,\,env\,+} - i_{g,\,env\,-} \right| = I_{ZVS}$$

$$\left| i_{b,\,env\,+} \right| = \frac{|V_{in}|}{2L_b} DT_{iL} = \frac{|V_{in}|}{2L_b} \frac{D}{f_L}$$

$$\left| i_{g,\,env\,-} \right| = \left| I_{gf} \right| - \frac{|V_{in}|}{2L_g} DT_{iL} = \left| I_{gf} \right| - \frac{|V_{in}|}{2L_g} \frac{D}{f_L}$$

$$\Rightarrow f_L = \frac{1}{2} \frac{D|V_{in}|}{\left| I_{gf} \right| + I_{ZVS}} \left( \frac{1}{L_g} + \frac{1}{L_b} \right)$$

For $V_{in} > V_{dc}/2$

$$D(V_{in} - V_{dc}/2) + (V_{in} - V_{dc})(1 - D) = 0$$

$$\Rightarrow D = 2 - \frac{V_{in}}{V_{dc}/2}$$

$$\left| i_{b,\,env\,+} - i_{g,\,env\,-} \right| = I_{ZVS}$$

$$\left| i_{b,\,env\,+} \right| = \frac{\left(\left|V_{in}\right| - V_{dc}/2\right)}{2L_b} DT_{iL} = \frac{\left(\left|V_{in}\right| - V_{dc}/2\right)}{2L_b} \frac{D}{f_L}$$

$$\left| i_{g,\,env\,-} \right| = \left| I_{gf} \right| - \frac{\left(\left|V_{in}\right| - V_{dc}/2\right)}{2L_g} DT_{iL} = \left| I_{gf} \right| - \frac{\left(\left|V_{in}\right| - V_{dc}/2\right)}{2L_g} \frac{D}{f_L}$$

$$\Rightarrow f_L = \frac{1}{2} \frac{D\left(\left|V_{in}\right| - V_{dc}/2\right)}{\left| I_{gf} \right| + I_{ZVS}} \left(\frac{1}{L_g} + \frac{1}{L_b}\right)$$

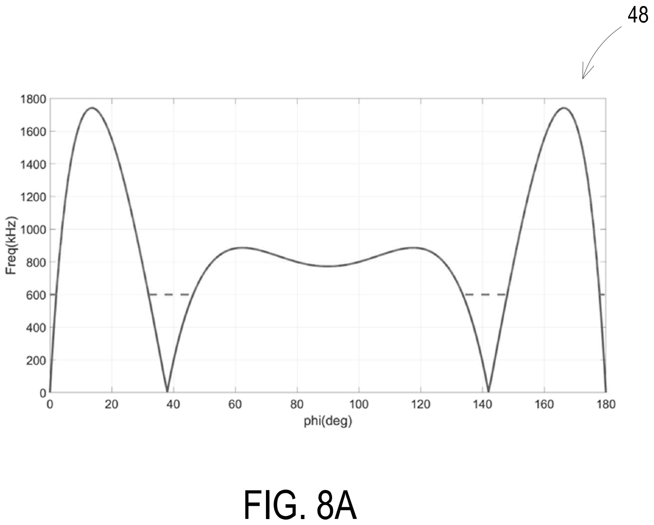

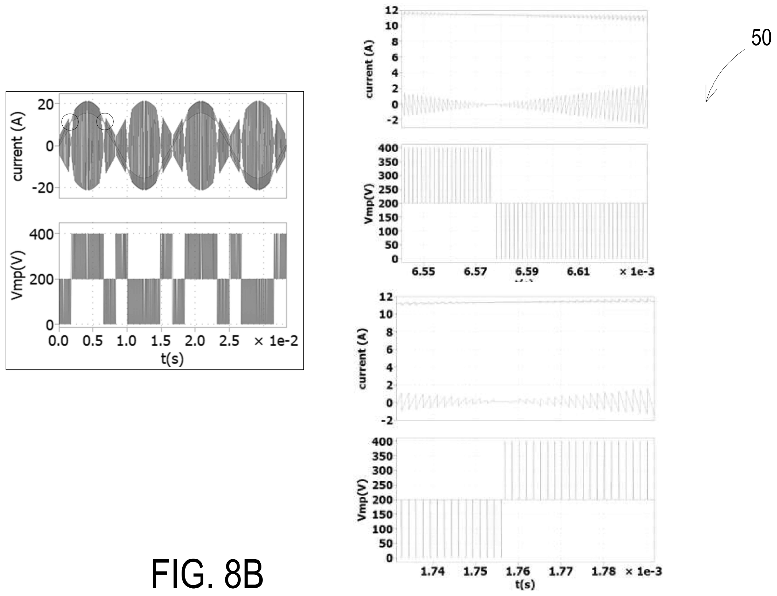

The variation in switching frequency is shown in the diagram 48 showing the inductor current frequency over a half line cycle in FIG. 8A, and the respective full line cycle current waveform showing $i_{Lb}$ and $i_{Lg}$, without addition of redundant states, over a span of two line cycles, is shown in the composite diagram 50 FIG. 8B. It can be seen that, around the points $|V_{in}| \sim V_{dc}/2$ (example locations represented by the two circles or dots in the upper left hand drawing), the current ripple subsides, thus resulting in a loss of ZVS turn-on. To solve this issue, redundant states are added, as shown in the diagram 52 in FIG. 9. These switching states are added around $|V_{in}| \sim V_{dc}/2$ in which, along with the pole voltage $V_{dc}/2$, are states such that the pole voltage of $V_{dc}$ is also achieved, thus providing the required voltage for inductor current ripple to build in a single switching cycle.

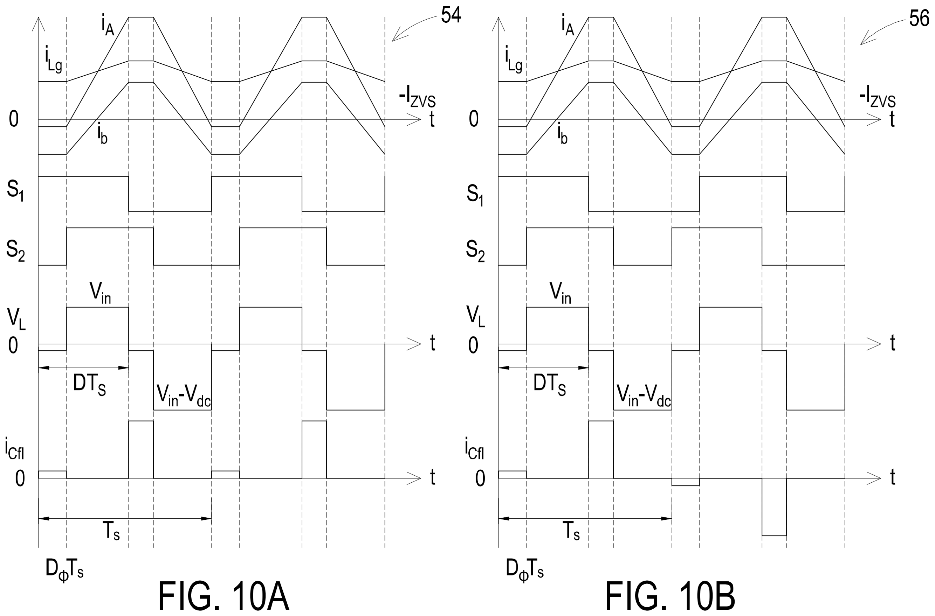

One shortcoming to the modulation scheme using redundant states in iTCM is illustrated in the diagram 54 of FIG. 10A, where the modulation may lead to an imbalance in flying capacitor charge. For instance, an imbalance may occur since the current through the flying capacitor ($i_{Cfl}$) is always flowing in one direction, leading it to be being charged continuously for the whole duration of the phase shifted modulation. To solve this issue, in one embodiment, a modulation scheme may be implemented via alternating the device that turns on after a delay of $D_\phi T_s$. For instance, as shown in the diagram 56 in FIG. 10B, for one switching cycle, $S_2$ follows $S_1$ with a delay of $D_\phi T_s$ while in the next switching cycle $S_i$ follows $S_2$ with a delay of $D_\phi T_s$. The resulting gating signals and current waveforms are shown in the diagram 56 of FIG. 10B. In particular, the diagram 56 shows that $i_{Cfl}$ is positive for one switching cycle and negative, with the same magnitude, for the consecutive switching cycle, thus balancing flying capacitor voltages in two switching cycles.

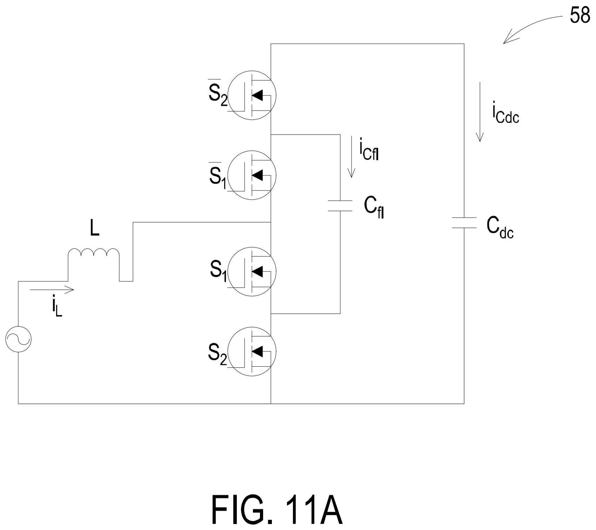

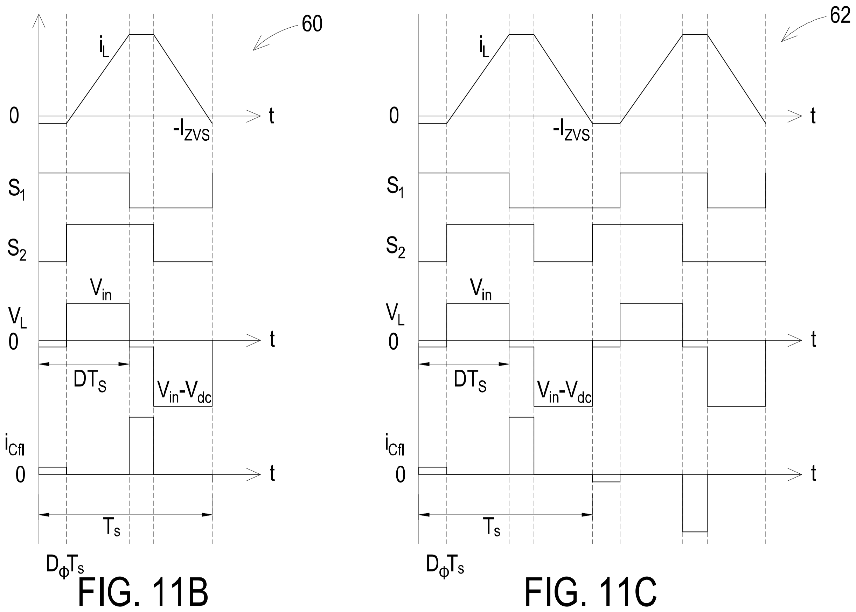

It is noted that the issue of flying capacitor charge imbalance may arise in phase-shifted modulation in an FCML PFC converter 58 (shown in FIG. 11A) operating according to TCM, as shown in the diagram 60 of FIG. 11B. In particular, the diagram 60 shows $i_{Cfl}$ for one switching cycle in the FCML (3-level) PFC converter 58 for TCM with redundant states. Using the method described in association with FIG. 10B (i.e., swapping the gating signals between the inner leg and outer leg) solves this issue as well, as shown by the diagram 62 in FIG. 11C.

The phase-shift required to achieve minimum required current for ZVS turn-on in iTCM, or more generally, iTrCM, is given by:

For $V_{in} < V_{dc}/2$

$$\left| i_{b,\,env\,+} - i_{g,\,env\,-} \right| = I_{ZVS}$$

$$\left| i_{b,\,env\,+} \right| = \left( \left| V_{in} \right| - \frac{V_{dc}}{2} \right) \frac{D_\phi T_S}{L_b} + \frac{\left| V_{in} \right|}{2L_b} (D - D_\phi) T_S = \left( \left| V_{in} \right| (D + D_\phi) - V_{dc} D_\phi \right) \frac{T_S}{2L_b}$$

$$= \frac{D V_{dc} T_S}{2L_b} (1 - D - D_\phi)$$

$$\left| i_{g,\,env\,-} \right| = \left| I_{gf} \right| - \frac{\left| V_{in} \right|}{2L_g} (D - D_\phi) T_S - \left( \left| V_{in} \right| - \frac{V_{dc}}{2} \right) \frac{D_\phi T_S}{L_g}$$

$$= \left| I_{gf} \right| - \left( \left| V_{in} \right| (D + D_\phi) - V_{dc} D_\phi \right) \frac{T_S}{2L_g} = \left| I_{gf} \right| - \frac{D V_{dc} T_S}{2L_g} (1 - D - D_\phi)$$

$$\Rightarrow D_\phi = 1 - D - \frac{2 \left( \left| I_{gf} \right| + I_{ZVS} \right)}{D V_{dc}} \left( \frac{f_s}{\dfrac{1}{L_g} + \dfrac{1}{L_b}} \right)$$

For $V_{in} > V_{dc}/2$

$$\left| i_{b,\,env\,+} - i_{g,\,env\,-} \right| = I_{ZVS}$$

$$\left| i_{b,\,env\,+} \right| = \frac{\left| V_{in} \right|}{2L_b} (D - D_\phi) T_S = \frac{V_{dc} T_S}{2L_b} (1 - D)(D - D_\phi)$$

$$\left| i_{g,\,env\,-} \right| = \left| I_{gf} \right| - \frac{\left| V_{in} \right|}{2L_g} (D - D_\phi) T_S = \left| I_{gf} \right| - \frac{V_{dc} T_S}{2L_g} (1 - D)(D - D_\phi)$$

$$\Rightarrow D_\phi = D - \frac{2 \left( \left| I_{gf} \right| + I_{ZVS} \right)}{\left| V_{in} \right|} \left( \frac{f_s}{\dfrac{1}{L_g} + \dfrac{1}{L_b}} \right) = D - \frac{2 \left( \left| I_{gf} \right| + I_{ZVS} \right)}{V_{dc} (1 - D)} \left( \frac{f_s}{\dfrac{1}{L_g} + \dfrac{1}{L_b}} \right)$$

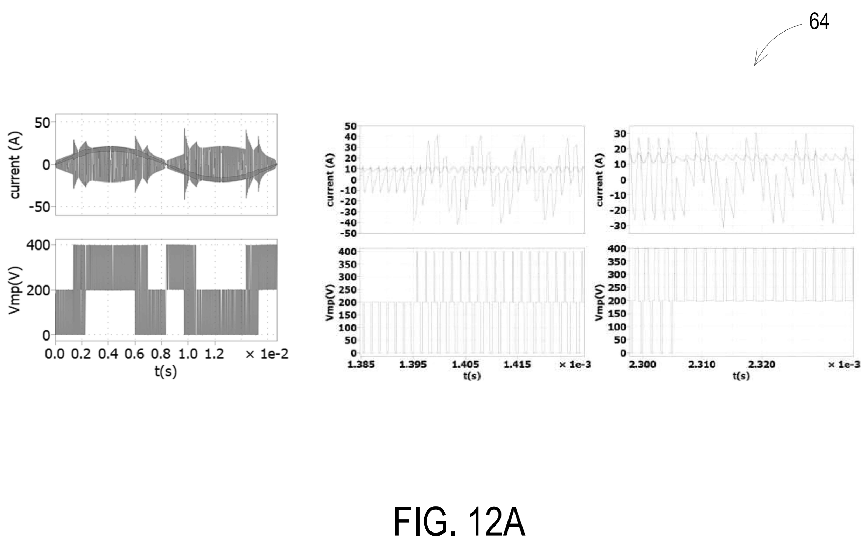

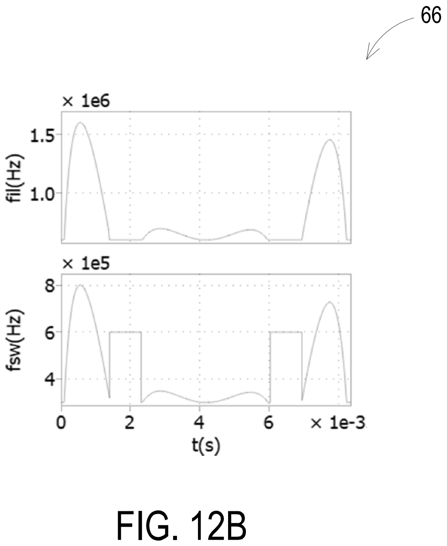

An example of the simulated current with the calculated phase shift is shown in the composite diagram 64 of FIG. 12A. That is, FIG. 12A shows the currents and mid-point voltages over one line cycle with ripple in $i_{Lb}$ added to achieve ZVS (with zoomed-in diagrams). FIG. 12B is a composite diagram 66 that shows an example inductor current frequency and switching frequency over a half line cycle. The inductor current frequency is clamped to a minimum during the phase-shifted three-level operation. In other words, the composite diagram 66 shows the $i_L$ frequency $fi_L$) and $f_{sw}$ variation over a half line cycle, and further illustrates the part for which variable phase shift modulation is added ($fi_L = f_{sw}$).

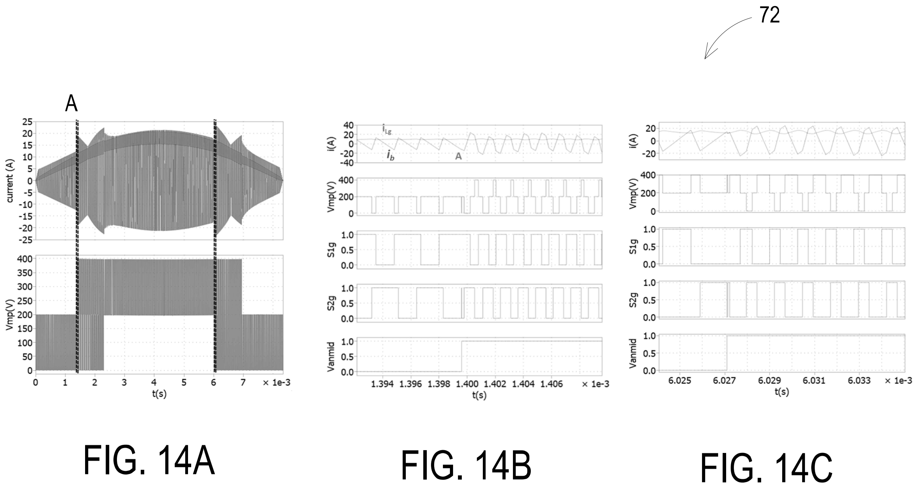

Now describing modulation transition based on trajectory control according to certain embodiments, and referring to the diagram 64 in FIG. 12A, it can be seen from the current that whenever the mode of operation changes from one hundred-eighty (180) degree phase shifted modulation to variable, phase-shifted modulation, there are spikes on the current. This is because when the mode changes, the current in $L_b$ and voltage in $C_b$ are changed suddenly, which causes transients in $L_b$ and $C_b$. Explaining FIG. 12A further, the zoomed-in diagrams in the center show spikes that are reaching 40 A, while with modulation transition based on trajectory control, iL_b only reaches up to 24 A. A slight increase in peak current is expected with the variable phase-shift modulation line (see, e.g., FIG. 14A), where in the trapezoidal waveform, the smaller peak should be enough to turn the device with ZVS turn-on, hence the larger peak is a bit higher.

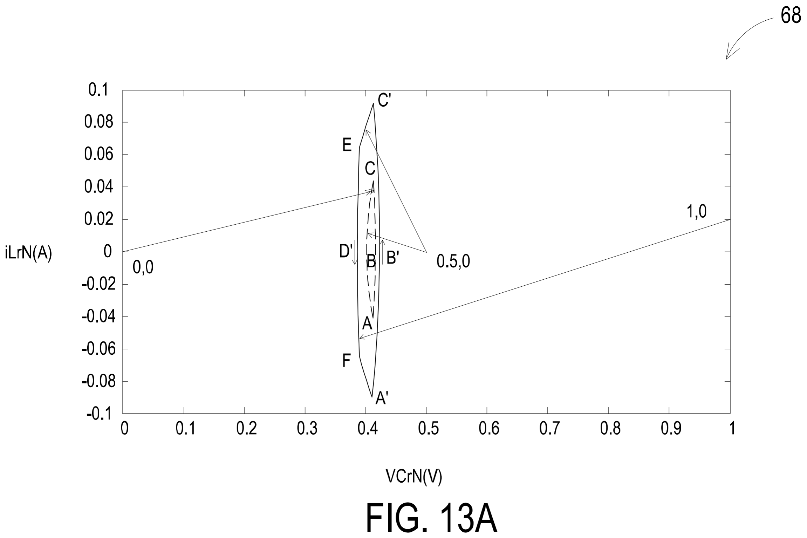

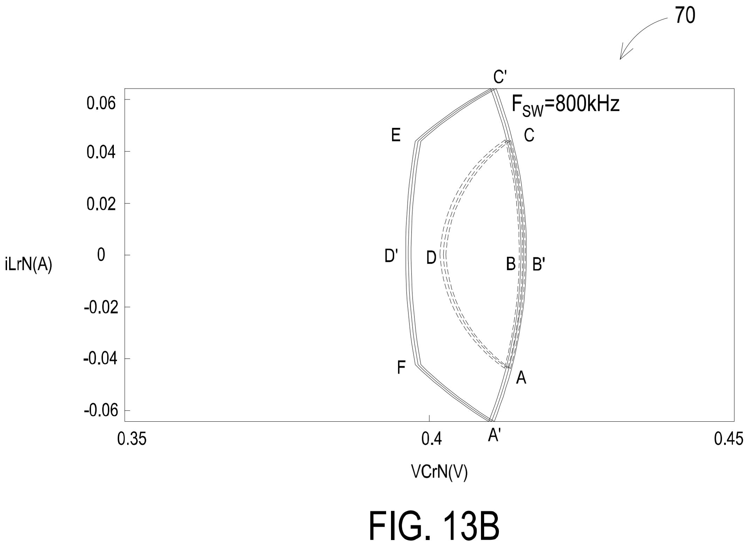

Trajectories of normalized $i_{LB}$ and $v_{Cb}$ for 180° phase-shifted modulation and variable (e.g., less than 180°) phase-shifted modulation with redundant states (i.e., for the two modes) are plotted as shown in the diagram 68 of FIG. 13A. The inner trajectory is for 180° phase shifted modulation while the outer trajectory is for a 108° (calculated using equations above) phase shift between $S_1$ and $S_2$. To ensure a smooth transition, the mode change should be performed in the common part of both the trajectories. Accordingly, one mechanism to ensure that there is a common part in both the trajectories is by choosing a switching frequency during a mode change such that it results in a common trajectory between the modes. One such trajectory transition is shown in the diagram 70 of FIG. 13B, where the path from A→B→C is the common path and the transition at point A leads to a smooth transition as shown in the diagram of FIG. 14A. FIG. 14A shows an example simulated current for a half line cycle, and in particular, the current waveforms in $L_b$ and $L_g$ with no spikes during the mode change based on the modulation transition based on trajectory control described in conjunction with FIG. 13B. The mode change transitions are zoomed in for FIGS. 14B-14C, and as shown, no spike is observed by changing from one mode to another at, say, point A (not annotated in FIG. 14C but similar to 14B). Though there is a slight increase observed in the figures, this slight increase in amplitude of current is expected from the equations. The smaller peak is designed to achieve ZVS turn-on for one of the devices, hence the second peak is expected to be larger owing to the slope of inductor current.

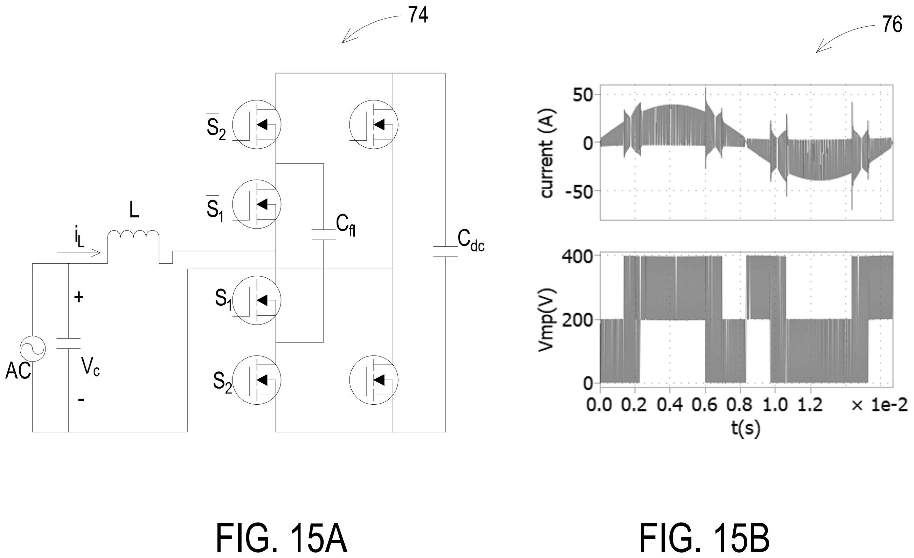

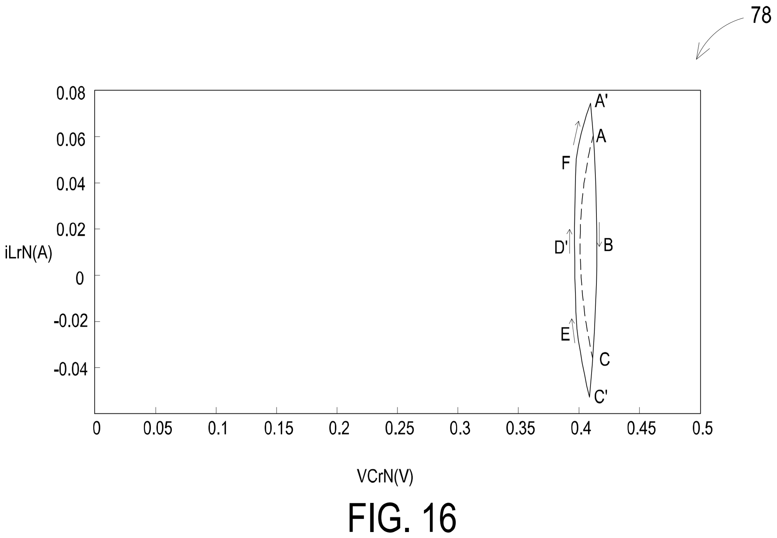

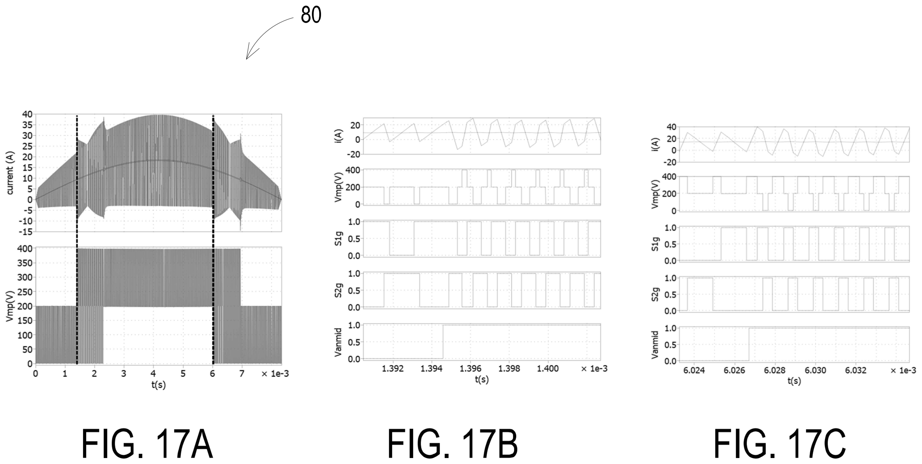

The issue of large current transients during mode change is also observed in a 3-level, FCML PFC converter 74 operating in TCM, as shown in FIG. 15A and the associated diagram 76 (FIG. 15B) showing currents and mid-point voltages over one line cycle with redundant states added. One mechanism to solve this issue is through the use of modulation transition based on trajectory control, as shown in the diagram 78 of FIG.16. For instance, FIG. 16 shows normalized trajectories of $i_{Lb}$ and $V_{cb}$ with trajectory control for TCM, where the trajectory during 180° phase-shift (inner) and <180° phase-shift (outer) are made equal from A→B→C. The mode is changed from one trajectory to another at point A. FIGS. 17A-17C are diagrams that show inductor current and mid-point voltage over a half line cycle in TCM based on the use of trajectory control as described in association with FIG. 16. For instance, diagram 80 in FIG. 17A shows an example half line cycle simulation, with zoomed-in pictures during two mode changes as shown in FIGS. 17B-17C. Inspection of these diagrams indicate that there is no spike in the current with modulation transition based on trajectory control.

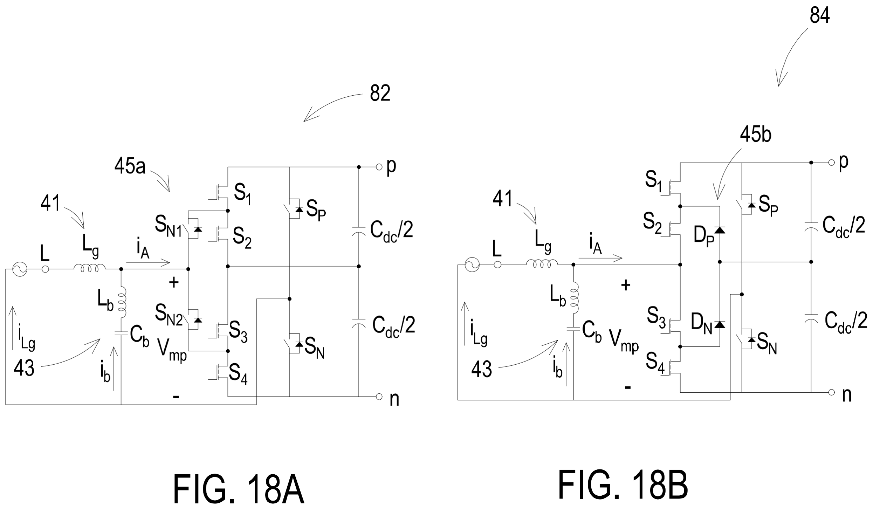

Though the above description has focused on FCML PFC converters where the switch pairs (e.g., corresponding to Si and $S_2$) are coupled to a (flying) capacitor as a circuit component, certain embodiments of multi-level, bi-directional AC-DC converters may be used that are not FCML PFC converters. FIG. 18A shows an embodiment of an example single-phase three-level Active-Neutral-Point-Clamped (ANPC) converter 82 and FIG. 18B shows an embodiment of an example Diode NPC (DNPC) converter 84 in iTCM (though as mentioned above, also applicable to trapezoidal waveforms, and hence suitable to be implemented according to iTrCM in general), where the circuit components used in place of the flying capacitor in FCML PFC converters includes switched diodes (e.g., $S_{N1}$ and $S_{N2}$) 45a in the ANPC converter 82 and diodes ($D_N$ and $D_P$) 45b in the DNPC converter 84. Also shown is the LC resonant branch 43 and inductor 41. Note that the diodes and/or switched diodes may be implemented in any one of a variety of materials, including Si, SiC, GaN, among other materials, as should be appreciated by one having ordinary skill in the art.

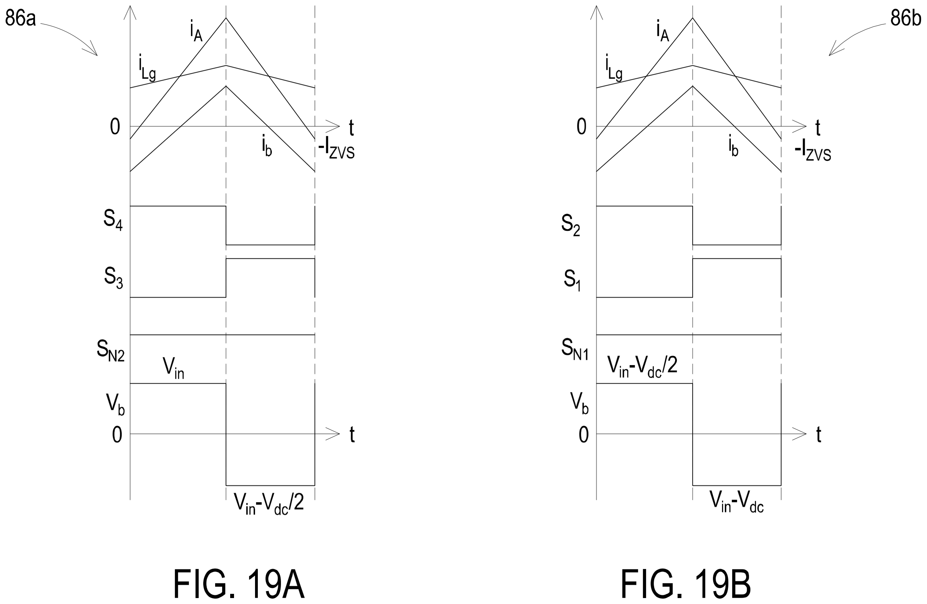

FIGS. 19A-19B show diagrams 86 (e.g., 86a, 86b, respectively) for the iTCM current waveforms and gating signals for an ANPC converter for $V_{in}<V_{dc}/2$ and $V_{in}>V_{dc}/2$, respectively. With continued reference also to FIG. 18A, noteworthy is that it can be observed that, with one resonant branch, all the devices are achieving ZVS turn-on. $S_{N2}$ and $S_{N1}$ are slow switching devices and are turned on and off depending on the AC voltage polarity as well as the magnitude of the AC voltage with respect to $V_{dc}/2$. When $V_{in}>0$ and $V_{in}<V_{dc}/2$, $S_{N2}$ is turned on. $S_N$ is also on when $V_{in}>0$. In the beginning of switching cycle, $S_4$ is on and current increases. When $S_4$ is turned off, $S_3$ is turned on with ZVS turn-on. Current $i_b$ and $i_{Lg}$ start to decrease after $S_3$ is turned on and when $i_A$ reaches $-I_{ZVS}$, $S_3$ is turned off and $S_4$ is turned on with ZVS. Similarly, when $V_{in}>V_{dc}/2$, $S_{N1}$ is on and Si turns on at peak $i_A$ and $S_2$ is turned on at $-I_{ZVS}$ with ZVS turn-on. Here, in one switching cycle, the devices are switching such that the devices switch from N-O state when $V_{in}<V_{dc}/2$ and from O-P state when $V_{in}>V_{dc}/2$.

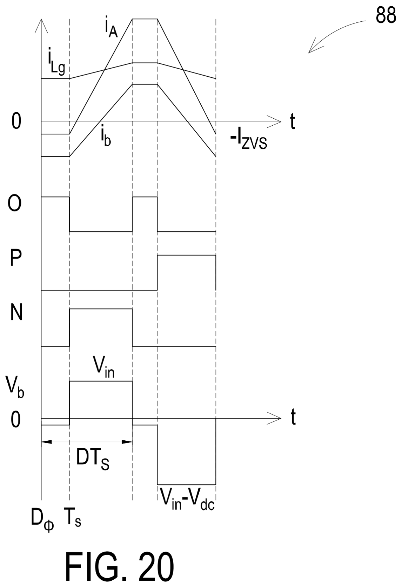

FIG. 20 shows a diagram 88 for the phase-shifted three-level current and gating waveforms for an ANPC converter for $V_{in}\sim V_{dc}/2$. Current ripple subsides when $V_{ac}\sim V_{dc}/2$ if the transition is made from P-O or O-N in one switching cycle like in FIG. 19 (FIGS. 19A and 19B). Hence when $V_{ac}\sim V_{dc}/2$, all the switching states (P,O,N) are required in one switching cycle.

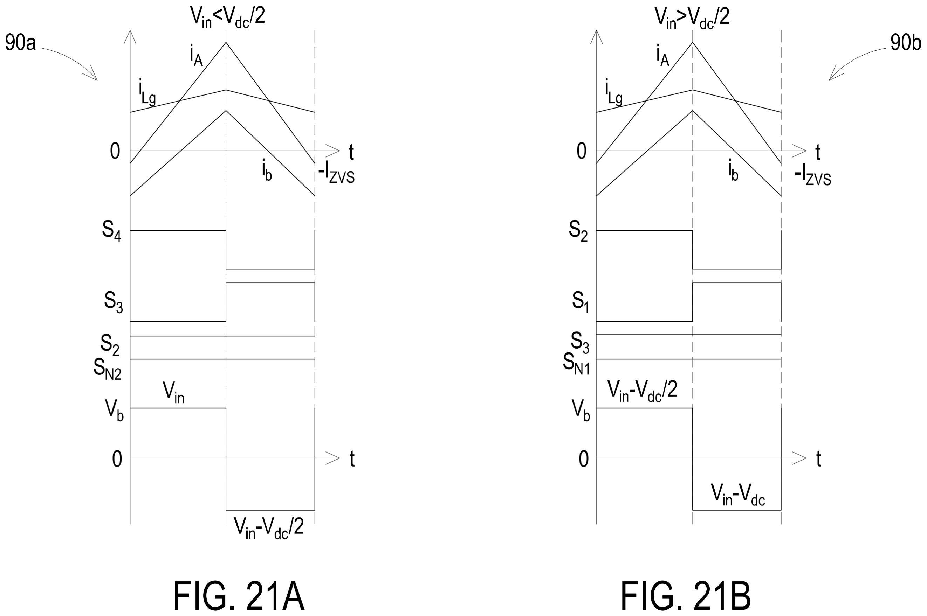

FIGS. 21A-21B show diagrams 90 (e.g., 90a, 90b, respectively) for gating signals for another switching scheme to achieve ZVS turn-on with iTCM in three-level ANPC. In this illustration, during the O state, three devices and one body diode are conducting, hence resulting in lower conduction losses as the current is shared between two paths.

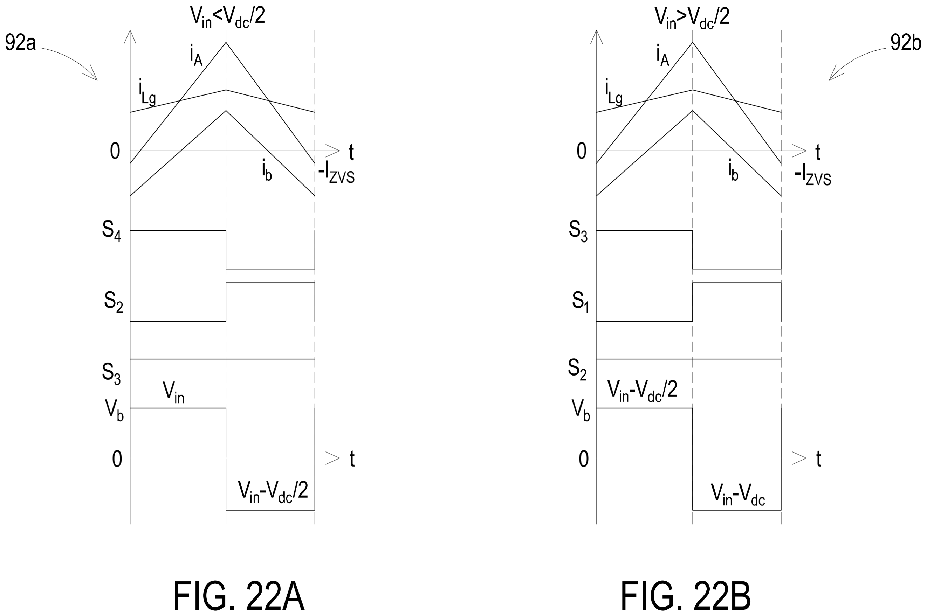

FIGS. 22A-22B show diagrams 92 (e.g., 92A, 92B, respectively) for gating signals for DNPC in iTCM mode for $V_{in}<V_{dc}/2$ and $V_{in}>V_{dc}/2$, respectively. With continued reference also to FIG. 18B, when $V_{in}>0$, $S_N$ is on and when $V_{in}<0$, $S_P$ is on. When $0<V_{in}<V_{dc}/2$, $S_1$ is kept off and $S_3$ is turned on as shown in FIG. 22 A. $S_4$ is on in the beginning of the switching cycle, $i_{Lg}$ and $i_b$ increase, $S_4$ turned off at peak $i_A$. $S_2$ is turned on with ZVS, $i_{Lg}$ and $i_b$ decrease and $S_2$ is turned off when $i_A$ reaches $-I_{ZVS}$. Thus, $S_2$ is turned on with ZVS. Diode $D_N$ conducts when current $i_A >0$ and diode $D_P$ conducts when $i_A <0$. Similarly when $V_{in}>V_{dc}/2$, $S_4$ is kept off and $S_2$ is on, $S_1$ turns on at peak $i_A$ and $S_3$ turns on at $-I_{ZVS}$ with ZVS.

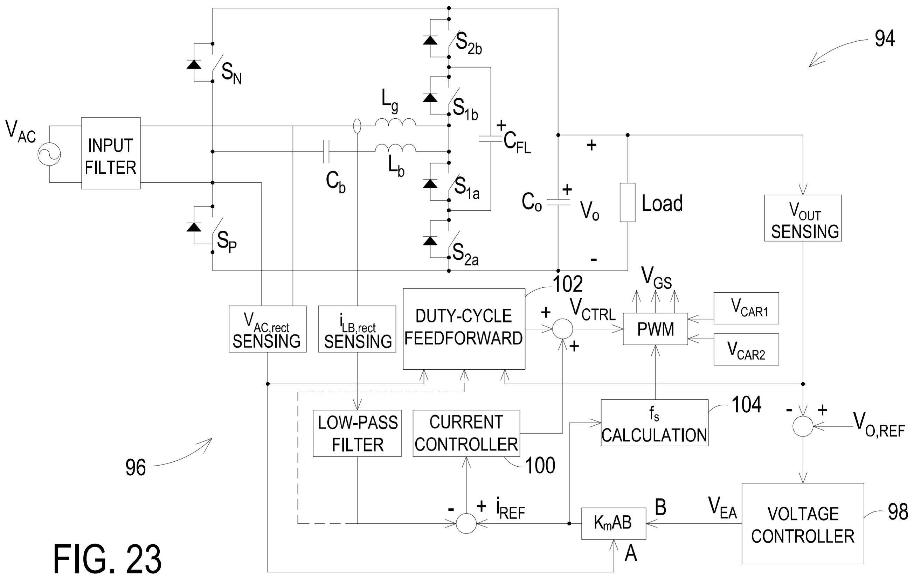

FIG. 23 is a schematic diagram that shows an embodiment of an example control loop for a multi-level, bi-directional AC-DC converter. In this example, the multi-level, bi-directional AC-DC converter is embodied as a FCML (3-level) PFC converter 94 with a control loop control 96 for iTrCM. In the control loop control 96, an output voltage controller 98 controls a reference current magnitude based on an output voltage error. This reference magnitude is multiplied with the input voltage to generate sinusoidal reference current for a current controller 100. The sensed inductor current is subtracted from the reference current to calculate error in current which acts as an input for the current controller 100. The output of the current controller along with the output of a duty-feedforward component 102 is used to generate a duty cycle for the switches (e.g., $S_{1a}$, $S_{1b}$, $S_{2a}$, $S_{2b}$). In addition to the existing controller described above, iTrCM also uses a switching frequency calculation 104 which is implemented based on the reference current as shown in FIG. 23.

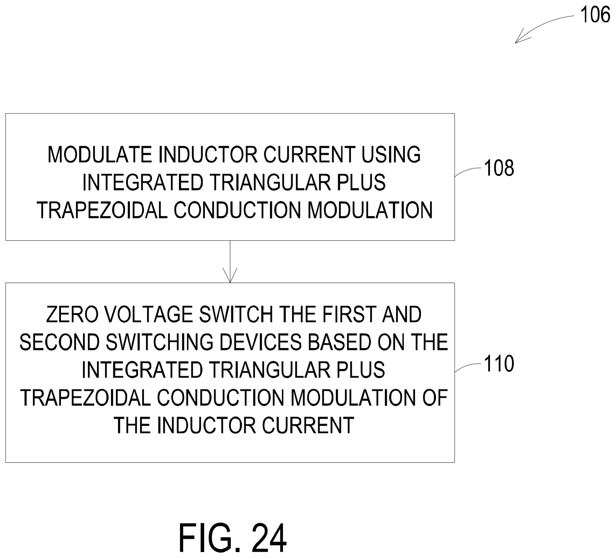

In view of the above-described embodiments, it should be appreciated within the context of the present disclosure that one embodiment of a modulation method for a multi-level, bi-directional AC-DC converter is disclosed, the method denoted with reference number 106 in FIG. 24. The method 106 may be implemented in a multi-level, bi-directional AC-DC converter including first and second switching devices of a corresponding first and second pair of switches, the first and second switching devices coupled to a first inductor, through which inductor current flows, and a resonant branch, the resonant branch including a second inductor and a first capacitor. In one embodiment, the method 106 includes modulating the inductor current using integrated triangular plus trapezoidal conduction modulation (108); and zero voltage switching the first and second switching devices based on the integrated triangular plus trapezoidal conduction modulation of the inductor current (110).

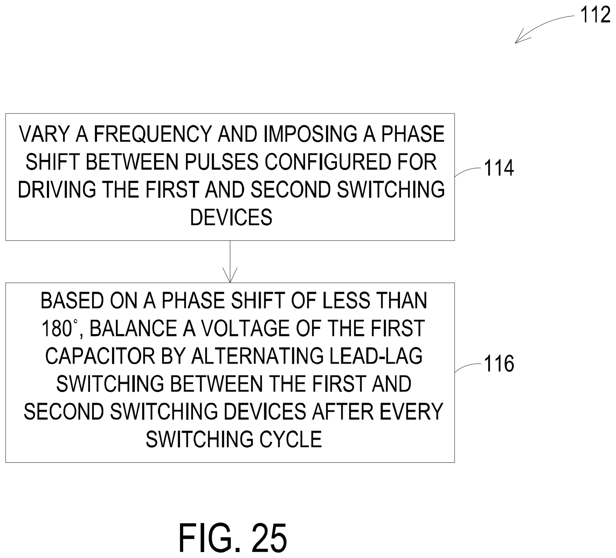

In view of the above-described embodiments, it should be appreciated within the context of the present disclosure that one embodiment of a modulation method for a multi-level, bi-directional AC/DC converter is disclosed, the method denoted with reference number 112 in FIG. 25. The method 112 may be implemented in a multi-level, bi-directional AC-DC converter including at least first and second switching devices of a corresponding first and second pair of switches, the first and second switching devices coupled to a first inductor, through which inductor current flows, the first and second switching devices further coupled to a first capacitor according to a flying capacitor arrangement. In one embodiment, the method 112 includes: varying a frequency and imposing a phase shift between pulses configured for driving the first and second switching devices (114); and based on a phase shift of less than 180°, balancing a voltage of the first capacitor by alternating lead-lag switching between the first and second switching devices after every switching cycle (116).

Having described certain embodiments of a multi-level, bi-directional AC-DC converter and associated methods, and with reference to at least FIGS. 7A-7B and 18A-18B, it should be appreciated that one example embodiment of a multi-level, bi-directional AC-DC converter (42, 82, or 84) (hereinafter, for the description of the first embodiment, simply referred to as converter) includes: a first inductor (41); a resonant branch (43) including a second inductor and a first capacitor; and at least two pairs of switches ($S_1$ and $\overline{S}_1$ and $S_2$ and $\overline{S}_2$ or $S_1$, $S_2$, $S_3$, and $S_4$) arranged in a branch and coupled to the first inductor and the resonant branch, the at least two pairs of switches coupled to at least one circuit component (45, 45a, 45b).

The example embodiment of the converter may include one or a combination of the following features.

For the converter of the example embodiment, the second inductor and the first capacitor of the resonant branch are arranged in series.

The converter of the example embodiment includes a multi-level power factor correction (PFC) converter (42) including at least one flying capacitor, wherein the at least one circuit component includes a second capacitor (45) arranged with the at least two pairs of switches ($S_1$ and $\overline{S}_1$ and $S_2$) as a flying capacitor arrangement, and the at least two pairs of switches includes an inner complimentary pair and an outer complimentary pair.

The converter of the example embodiment is configured as an N-level, flying capacitor, multi-level converter (42), wherein N is greater than or equal to 3.

The converter of the example embodiment, wherein the at least one circuit component includes a first and second switched diode (45a) arrangement.

The converter of the example embodiment, wherein the multi-level, bi-directional AC-DC converter is configured as an N-level, active-neutral-point-clamped converter (82), where N is greater than or equal to 3.

The converter of the example embodiment, wherein the at least one circuit component includes a first diode and a second diode (45b).

The converter of the example embodiment, wherein the multi-level, bi-directional AC-DC converter is configured as an N-level, diode neutral-point-clamped converter (84), where N is greater than or equal to 3.

With reference to at least FIGS. 7A, 7C, 7D, 9A, 10B, 11C, 12A, 18A-18B, 19A-22B and 24, it should be appreciated that one example first embodiment of a modulation method (106) for a multi-level, bi-directional AC-DC converter (42, 82, or 84) including first and second switching devices ($S_1$, $S_2$ or $S_3$, $S_4$) of a corresponding first and second pair of switches ($S_1$ and $\overline{S}_1$ and $S_2$ and $\overline{S}_2$ or $S_1$, $S_2$, $S_3$, and $S_4$), the first and second switching devices coupled to a first inductor (41), through which inductor current flows, and a resonant branch (43), the resonant branch including a second inductor and a first capacitor, the method including: modulating the inductor current using integrated triangular plus trapezoidal conduction modulation (108); and zero voltage switching the first and second switching devices based on the integrated triangular plus trapezoidal conduction modulation of the inductor current (110).

The example first embodiment of the modulation method (106) may include one or combination of the following features.

The example first embodiment of the modulation method, wherein the multi-level, bi-directional AC-DC converter includes an N-level, active-neutral-point-clamped converter (82) or an N-level, diode neutral-point-clamped converter (84), where N is greater than or equal to 3.

The example first embodiment of the modulation method, wherein the N-level, active-neutral-point-clamped converter or the N-level, diode neutral-point-clamped converter uses P, O, and N switching states (88) for the first and second switching devices in a single switching cycle (86).

The example first embodiment of the modulation method, wherein the multi-level, bi-directional AC-DC converter includes a flying capacitor, multi-level (FCML) converter (42), wherein the first and second pair of switches is further coupled to a second capacitor (45) in accordance with a flying capacitor arrangement, further including varying a frequency (46) and imposing a phase shift (52) between pulses configured for driving the first and second switching devices.

The example first embodiment of the modulation method, wherein based on a phase shift of less than 180°, balancing a voltage of the second capacitor by alternating lead-lag switching between the first and second switching devices after every switching cycle (56, 62).

The example first embodiment of the modulation method, further including implementing modulation transition based on trajectory control (70, 78) based on a mode change.

With reference to at least FIGS. 7A-7D, 10B, 11C, 13A, 13B, 15A, 15B, 16, it should be appreciated that one example second embodiment of a modulation method (112) for a multi-level, bi-directional AC-DC converter (42, 82, or 84) including at least first and second switching devices ($S_1$, $S_2$) of a corresponding first and second pair of switches ($S_1$ and $\overline{S}_1$ and $S_2$ and $\overline{S}_2$), the first and second switching devices coupled to a first inductor (41), through which inductor current flows, the first and second switching devices further coupled to a first capacitor (45) according to a flying capacitor arrangement, the method including: varying a frequency and imposing a phase shift between pulses configured for driving the first and second switching devices (114); and based on a phase shift of less than 180°, balancing a voltage of the first capacitor by alternating lead-lag switching between the first and second switching devices after every switching cycle (116).

The example second embodiment of the modulation method (112) may include one or combination of the following features.

The example second embodiment of the modulation method, further including modulating the inductor current using triangular plus trapezoidal conduction modulation (76).

The example second embodiment of the modulation method, wherein based on a mode change according to the phase shift, implementing modulation transition based on trajectory control (78).

The example second embodiment of the modulation method, wherein the multi-level, bi-directional AC/DC converter further includes a resonant branch (43), the resonant branch including a second inductor and a second capacitor, and the method further includes modulating the inductor current using integrated triangular plus trapezoidal conduction modulation (46).

The example second embodiment of the modulation method, wherein based on a mode change according to the phase shift, implementing modulation transition based on trajectory control (70).

Note that the converter embodiment and first and second modulation method embodiments may be combined in any combination in some embodiments.

**Claims**

1. A multi-level, bi-directional AC-DC converter (42, 82, 84), **characterized by** comprising:

    a first inductor (41);
    a resonant branch (43) comprising a second inductor ($L_b$) and a first capacitor ($C_b$); and
    at least two pairs of switches ($S_1$ and $\overline{S}_1$ and $S_2$ and $\overline{S}_2$ or $S_1$, $S_2$, $S_3$, and $S_4$) arranged in a branch and coupled to the first inductor (41) and the resonant branch (43), the at least two pairs of switches ($S_1$ and $\overline{S}_1$ and $S_2$ and $\overline{S}_2$ or $S_1$, $S_2$, $S_3$, and $S_4$) coupled to at least one circuit component (45, 45a, 45b).

2. The multi-level, bi-directional AC-DC converter (42, 82, 84) of claim 1, wherein the multi-level, bi-directional AC-DC converter (42, 82, 84) comprises a multi-level, power factor correction converter (42) comprising at least one flying capacitor, wherein the at least one circuit component (45, 45a, 45b) comprises a second capacitor (45) arranged with the at least two pairs of switches ($S_1$ and $\overline{S}_1$ and $S_2$ and $\overline{S}_2$) as a flying capacitor arrangement, and the at least two pairs of switches ($S_1$ and $\overline{S}_1$ and $S_2$ and $\overline{S}_2$) comprises an inner complimentary pair ($S_1$, $\overline{S}_1$) and an outer complimentary pair ($S_2$, $\overline{S}_2$),
    wherein the multi-level converter (42, 82, 84) is configured as an N-level, flying capacitor, multi-level converter (42), wherein N is greater than or equal to 3.

3. The multi-level, bi-directional AC-DC converter (42, 82, 84) of claim 1, wherein the at least one circuit component (45, 45a, 45b) comprises a first and second switched diode (45a) arrangement,
    wherein the multi-level, bi-directional AC-DC converter (42, 82, 84) is configured as an N-level, active-neutral-point-clamped converter (82), where N is greater than or equal to 3.

4. The multi-level, bi-directional AC-DC converter (42, 82, 84) of claim 1, wherein the at least one circuit component (45, 45a, 45b) comprises a first diode and a second diode (45b),
wherein the multi-level, bi-directional AC-DC converter (42, 82, 84) is configured as an N-level, diode neutral-point-clamped converter (84), where N is greater than or equal to 3.

5. The multi-level, bi-directional AC-DC converter (42, 82, 84) according to any one of the above claims, wherein the second inductor ($L_b$) and the first capacitor ($C_b$) of the resonant branch (43) are arranged in series.

6. A modulation method (106) for a multi-level, bi-directional AC-DC converter (42, 82, 84) comprising first and second switching devices ($S_1$, $S_2$ or $S_3$, $S_4$) of a corresponding first and second pair of switches ($S_1$ and $\overline{S}_1$ and $S_2$ and $\overline{S}_2$ or $S_1$, $S_2$, $S_3$, and $S_4$), the first and second switching devices coupled to a first inductor (41), through which inductor current flows, and a resonant branch (43), the resonant branch (43) comprising a second inductor ($L_b$) and a first capacitor ($C_b$), the modulation method (106) **characterized by** comprising:

   modulating the inductor current using integrated triangular plus trapezoidal conduction modulation (108); and
   zero voltage switching the first and second switching devices based on the integrated triangular plus trapezoidal conduction modulation of the inductor current (110).

7. The modulation method (106) of claim 6, wherein the multi-level, bi-directional AC-DC converter (42, 82, 84) comprises an N-level, active-neutral-point-clamped converter (82) or an N-level, diode neutral-point-clamped converter (84), where N is greater than or equal to 3.

8. The modulation method (106) of claim 7, wherein the N-level, active-neutral-point-clamped converter (82) or the N-level, diode neutral-point-clamped converter (84) uses P, O, and N switching states for the first and second switching devices in a single switching cycle.

9. The modulation method (106) of claim 6, wherein the multi-level, bi-directional AC-DC converter (42, 82, 84) comprises a flying capacitor, multi-level converter (42), wherein the first and second pair of switches is further coupled to a second capacitor (45) in accordance with a flying capacitor arrangement, further comprising varying a frequency (46) and imposing a phase shift (52) between pulses configured for driving the first and second switching devices.

10. The modulation method (106) of claim 9, wherein based on a phase shift of less than 180°, balancing a voltage of the second capacitor by alternating lead-lag switching between the first and second switching devices after every switching cycle (56, 62).

11. The modulation method (106) of claim 6, further comprising implementing modulation transition based on trajectory control based on a mode change (70, 78).

12. A modulation method (112) for a multi-level, bi-directional AC/DC converter (42, 82, 84) comprising at least first and second switching devices ($S_1$, $S_2$) of a corresponding first and second pair of switches ($S_1$ and $\overline{S}_1$ and $S_2$ and $\overline{S}_2$), the first and second switching devices coupled to a first inductor (41), through which inductor current flows, the first and second switching devices further coupled to a first capacitor (45) according to a flying capacitor arrangement, the modulation method **characterized by** comprising:

   varying a frequency and imposing a phase shift between pulses configured for driving the first and second switching devices (114); and
   based on a phase shift of less than 180°, balancing a voltage of the first capacitor by alternating lead-lag switching between the first and second switching devices after every switching cycle (116).

13. The modulation method (112) of claim 12, further comprising modulating the inductor current using triangular plus trapezoidal conduction modulation (76).

14. The modulation method (112) of claim 12, wherein the multi-level, bi-directional AC/DC converter (42, 82, 84) further comprises a resonant branch (43), the resonant branch (43) comprising a second inductor ($L_b$) and a second capacitor ($C_b$), and the modulation method (112) further comprises modulating the inductor current using integrated triangular plus trapezoidal conduction modulation (46).

**15.** The modulation method (112) according to any of claims 12 to 14, wherein based on a mode change according to the phase shift, implementing modulation transition based on trajectory control (70).

FIG. 1A PRIOR ART

FIG. 1B PRIOR ART

FIG. 1C PRIOR ART

EP 4 746 277 A1

FIG. 1D PRIOR ART

FIG. 2A PRIOR ART

22

$i_A$

$i_{Lg}$

0

$i_b$

t

$S_1$

$V_{in}$

$V_b$

0

t

$V_{in} - V_{dc}$

# FIG. 2B PRIOR ART

FIG. 2C PRIOR ART

FIG. 3A PRIOR ART

EP 4 746 277 A1

FIG. 3B PRIOR ART

EP 4 746 277 A1

FIG. 3C PRIOR ART

EP 4 746 277 A1

FIG. 4 PRIOR ART

FIG. 5 PRIOR ART

EP 4 746 277 A1

FIG. 6A

FIG. 6B

FIG. 7A

FIG. 7B

**FIG. 7C**

**FIG. 7D**

48

phi(deg)

Freq(kHz)

FIG. 8A

FIG. 8B

FIG. 9

FIG. 10B

FIG. 10A

FIG. 11A

FIG. 11B

FIG. 11C

FIG. 12A

EP 4 746 277 A1

66

FIG. 12B

FIG. 13A

EP 4 746 277 A1

FIG. 13B

FIG. 14A

FIG. 14B

FIG. 14C

FIG. 15B

FIG. 15A

EP 4 746 277 A1

78

FIG. 16

FIG. 17A

FIG. 17B

FIG. 17C

44

**FIG. 18A**

**FIG. 18B**

FIG. 19A

FIG. 19B

FIG. 20

FIG. 21A

FIG. 21B

EP 4 746 277 A1

FIG. 22A

FIG. 22B

FIG. 23

106

```
┌─────────────────────────────────────┐
│   MODULATE INDUCTOR CURRENT USING    │
│      INTEGRATED TRIANGULAR PLUS      │── 108
│   TRAPEZOIDAL CONDUCTION MODULATION  │
└─────────────────────────────────────┘
                  │
                  ▼
┌─────────────────────────────────────┐
│    ZERO VOLTAGE SWITCH THE FIRST AND │
│  SECOND SWITCHING DEVICES BASED ON THE│
│      INTEGRATED TRIANGULAR PLUS      │── 110
│  TRAPEZOIDAL CONDUCTION MODULATION OF │
│         THE INDUCTOR CURRENT         │
└─────────────────────────────────────┘
```

# FIG. 24

112

```
┌─────────────────────────────────────┐
│ VARY A FREQUENCY AND IMPOSING A PHASE│
│ SHIFT BETWEEN PULSES CONFIGURED FOR  │──114
│ DRIVING THE FIRST AND SECOND SWITCHING│
│             DEVICES                  │
└─────────────────────────────────────┘
                    │
                    ▼
┌─────────────────────────────────────┐
│ BASED ON A PHASE SHIFT OF LESS THAN  │
│ 180˚, BALANCE A VOLTAGE OF THE FIRST │
│ CAPACITOR BY ALTERNATING LEAD-LAG    │──116
│ SWITCHING BETWEEN THE FIRST AND      │
│ SECOND SWITCHING DEVICES AFTER EVERY │
│             SWITCHING CYCLE          │
└─────────────────────────────────────┘
```

FIG. 25

Europäisches
Patentamt
European
Patent Office
Office européen
des brevets

# EUROPEAN SEARCH REPORT

**Application Number**

EP 25 21 5195

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/275276 A1 (TUNG FENG-HSUAN [TW] ET AL) 15 August 2024 (2024-08-15) | 1-5 | INV.<br>H02M7/483 |
| Y | * figure 1 * | 6-11,14 | H02M1/00<br>H02M7/487 |
| Y | LU LIANGJI ET AL: "Current Programmed Mode Control of Multi-Level Flying Capacitor Converter Near Zero-Ripple Current Region",<br>2019 IEEE APPLIED POWER ELECTRONICS CONFERENCE AND EXPOSITION (APEC), IEEE,<br>17 March 2019 (2019-03-17), pages 3064-3070, XP033555975,<br>DOI: 10.1109/APEC.2019.8721855<br>[retrieved on 2019-05-24]<br>* page 3067; figure 1 * | 6-11,13,14 | H02M1/42 |
| X | US 2024/162831 A1 (MUKHERJEE SATYAKI [US] ET AL) 16 May 2024 (2024-05-16) | 12,15 | |
| Y | * paragraphs [0006], [0050]; figure 2 * | 13,14 | |

**TECHNICAL FIELDS SEARCHED (IPC)**

H02M

The present search report has been drawn up for all claims

| Place of search | Date of completion of the search | Examiner |
|---|---|---|
| The Hague | 18 February 2026 | Gusia, Sorin |

EPO FORM 1503 03.82 (P04C01)

## ANNEX TO THE EUROPEAN SEARCH REPORT
## ON EUROPEAN PATENT APPLICATION NO.

EP 25 21 5195

This annex lists the patent family members relating to the patent documents cited in the above-mentioned European search report.
The members are as contained in the European Patent Office EDP file on
The European Patent Office is in no way liable for these particulars which are merely given for the purpose of information.

18-02-2026

| Patent document cited in search report | Publication date | Patent family member(s) | | Publication date |
|---|---|---|---|---|
| US 2024275276 A1 | 15-08-2024 | CN | 118508741 A | 16-08-2024 |
| | | EP | 4418511 A1 | 21-08-2024 |
| | | US | 2024275276 A1 | 15-08-2024 |
| US 2024162831 A1 | 16-05-2024 | CN | 118017809 A | 10-05-2024 |
| | | EP | 4369580 A1 | 15-05-2024 |
| | | JP | 7744397 B2 | 25-09-2025 |
| | | JP | 2024068647 A | 20-05-2024 |
| | | TW | 202420713 A | 16-05-2024 |
| | | US | 2024162831 A1 | 16-05-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20240162831 A

**Non-patent literature cited in the description**

- **Z. LIU** ; **F. C. LEE** ; **Q. LI** ; **Y. YANG**. Design of GaN-Based MHz Totem-Pole PFC Rectifier. *IEEE Journal of Emerging and Selected Topics in Power Electronics*
- **D. ROTHMUND** ; **T. GUILLOD** ; **D. BORTIS** ; **J.W. KOLAR**. 99.1% Efficient 10 kV SiC-Based Medium-Voltage ZVS Bidirectional Single-Phase PFC AC/DC Stage. *IEEE Journal of Emerging and Selected Topics in Power Electronics*, June 2019, vol. 7 (2)
- **T. A. MEYNARD** ; **H. FOCH**. Multi-level conversion: high voltage choppers and voltage-source inverters. *PESC '92 Record. 23rd Annual IEEE Power Electronics Specialists Conference*

- **Q. HUANG** ; **Q. MA** ; **P. LIU** ; **A. Q. HUANG** ; **M. A. DE ROOIJ**. 99% Efficient 2.5-kW Four-Level Flying Capacitor Multilevel GaN Totem-Pole PFC. *IEEE Journal of Emerging and Selected Topics in Power Electronics"*
- **N. HARYANI** ; **S. J. OHN** ; **J. HU** ; **P. RANKIN** ; **R. BURGOS** ; **D. BOROYEVICH**. A Novel ZVS Turn-on Triangular Current Mode Control with Phase Synchronization for Three Level Inverters. *2018 IEEE Energy Conversion Congress and Exposition (ECCE)*, 2018, 2207-2214